# FASCICULE DE BREVET EUROPEEN

(11) **EP 2 780 219 B1**
(45) Date de publication et mention de la délivrance du brevet: **14.09.2016**
(21) Numéro de dépôt: 11799738.7
(22) Date de dépôt: 18.11.2011
(51) Int. Cl.: B62K 3/00, B62K 15/00

(54) **TROTTINETTE TRIPTYQUE PLIANTE A ROUES ESCAMOTABLES**
DREITEILIGER ZUSAMMENKLAPPBARER TRETROLLER MIT EINZIEHBAREN RÄDERN
THREE PART FOLDING SCOOTER WITH RETRACTABLE WHEELS

(43) Date de publication de la demande: 24.09.2014
(73) Titulaire: Benarrouch, Jacques, 69100 Villeurbanne (FR)
(72) Inventeur: Benarrouch, Jacques, 69100 Villeurbanne (FR)
(74) Mandataire: Jeannet, Olivier
(86) Numéro de dépôt international: PCT/FR2011/000610
(87) Numéro de publication internationale: WO 2012/072893

(56) Documents cités:
- EP-A2- 0 926 055
- US-B1- 6 616 154

## Description

### Trottinette triptyque pliante à roues escamotables.

La présente invention concerne un concept de trottinette pliante à plateau triptyque et roues escamotables dans le but d'en réduire le volume de pliage à son plus faible encombrement. Certaines trottinettes sont pliantes manuellement, semi-automatiquement ou automatiquement, dans le but principal de gain de place, assez souvent au détriment de leur robustesse. La publication de brevet N° US 6 616 154 divulgue une trottinette selon le préambule de la revendication 1 annexée. L'invention est définie par la partie caractérisante de cette revendication 1. La trottinette

de l'invention présente les caractéristiques suivantes :
- c'est la seule dont les deux roues sont escamotables,
- après pliage, le volume obtenu est le plus petit possible pour que la trottinette puisse, une fois déployée, conserver une longueur suffisante qui convienne à la fois aux adultes et aux enfants.

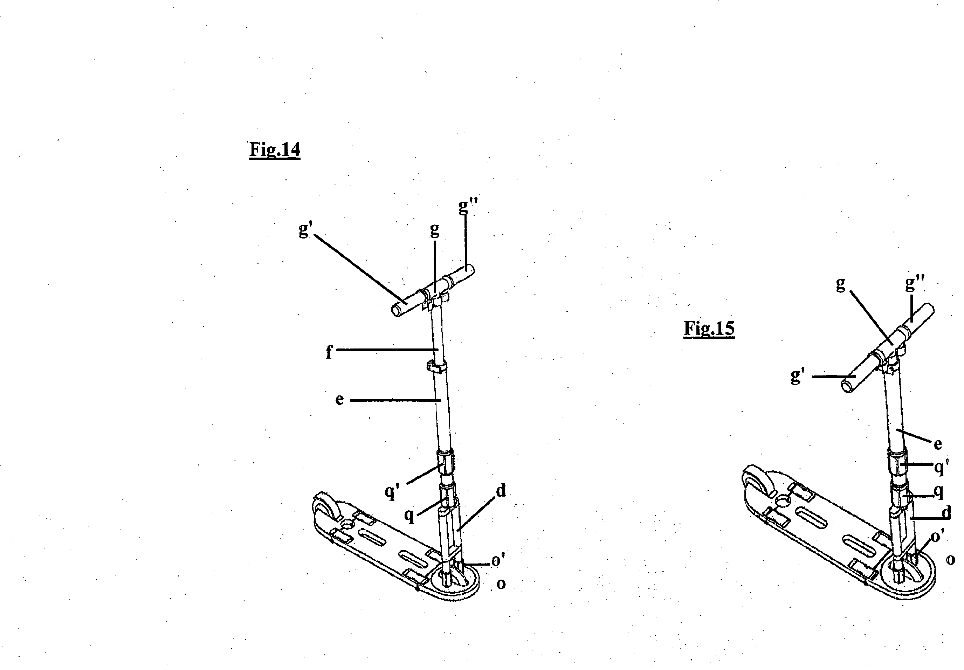

La trottinette du brevet, une fois pliée, s'inscrit dans un parallélépipède régulier, dont la base est voisine d'un carré de quinze centimètres de coté et dont la hauteur est d'environ 35 cm ; complètement déployée, sa longueur hors tout est de l'ordre de 65 à 70 cm, et son guidon se situe à environ à 1 m du sol (fig. 14 et 15 / pl.8) ; cependant la colonne de direction étant télescopique, le guidon peut descendre jusqu'à environ 65 cm du sol Le volume de la trottinette, pliée, peut encore être beaucoup réduit pour une utilisation uniquement réservée aux enfants.

En effet, le diamètre le plus utilisé d'une roue de trottinette pour adultes et adolescents est de 10 cm ; or pour les enfants de 7-8 ans à 12-13 ans, les roués utilisées ont couramment un diamètre de 7,5 cm ; avec ce diamètre de roue, la trottinette du brevet, une fois pliée aurait une longueur inférieure à 30 cm.
- Après déploiement et verrouillage, il est primordial que la robustesse de la trottinette du brevet permette son utilisation dans tous les domaines, et en particulier pour réaliser des figures acrobatiques, ainsi que des sauts libres et de tremplin.

Le recensement d'une grande quantité de trottinettes, brevetées ou non, permet de constater qu'il existe un nombre plutôt réduit de dispositifs permettant de limiter l'encombrement d'un guidon, d'un plateau, d'une roue arrière...Ces dispositifs concernent en général la colonne de direction (télescopique), le plateau (pliant en deux parties sur charnière médiane ou longitudinale, glissant, ...) la roue arrière (rétractable).

Lé pliage en V fermé entre le plateau et la colonne de direction reste le moyen le plus connu pour limiter l'encombrement en hauteur, mais ne diminue pas la longueur.

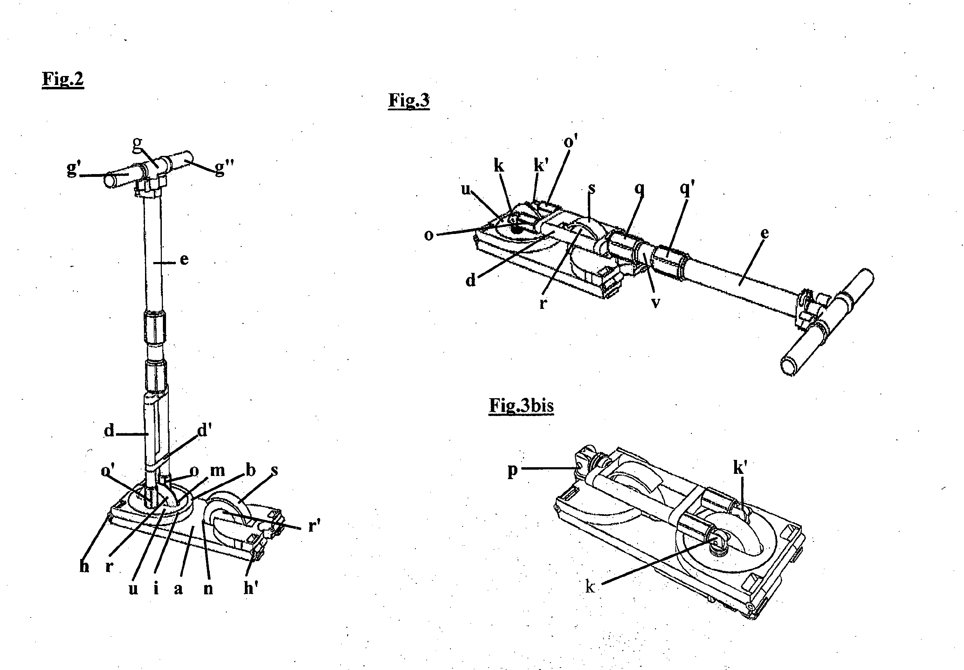

On retiendra de l'art antérieur qu'en général la recherche d'une utilisation large de la trottinette (en même temps moyen de transport urbain doux, mais aussi engin ludique, sportif voire acrobatique) a amené les concepteurs à la solidarisation directe la plus solide possible du support de la roue avant avec le plateau, mais cela présente trois inconvénients:
1) Ce souci prioritaire élimine d'emblée les possibilités d'une réduction importante du volume.
2) La solidarisation du support de la roue avant avec le plateau nécessite toujours un assemblage par soudure, ce qui présente nécessairement une difficulté en fabrication, car réaliser une soudure à la fois solide et esthétique n'est pas aisé, et nécessite, sur chaîne, un lent travail de spécialistes.
3) Parmi tous les dispositifs de roue avant connus à ce jour, aucun d'entre eux n'intègre de protection anti-choc avant, si bien que très souvent une roue avant, et/ou son axe, et/ou sa fourche, explosent contre un obstacle dur tel qu'un trottoir, un muret, un escalier... etc Le dispositif de la trottinette triptyque du brevet est globalement présenté dans la figure 1 pl.1 :
   Le plateau (a) partie centrale de la trottinette comporte, dans le sens de la longueur, deux ouvertures médianes oblongues alignées et de mêmes dimensions, (m) et (n), destinées à recevoir respectivement après rabattement à plat (fig.2/pl.2) de la partie avant (b) et de la partie arrière (c), respectivement sur charnières (h) et (h') sur le plateau (a) (d'où le terme triptyque), la roue directrice avant (r) verticalement intégrée à une platine horizontale (u), prisonnière rotative de (b), et la roue arrière (r') agencée d'un frein à pied radial (s), solidarisé à (c) par un moyen connu de ressort de rappel.

Ainsi conçues, (r) et (r') sont partiellement escamotées dans l'épaisseur de leurs plateaux respectifs (b) et (c), et ensuite additionnellement escamotées dans l'épaisseur du plateau (a) contre lequel (b) et (c) sont rabattus à plat. Pour exemple, si l'épaisseur des plateaux est de 2 cm, et que le diamètre de roue est de 10 cm, après escamotage les roues dépassent encore de 6 cm en cumul au-dessus et au-dessous des plateaux.

Plus précisément, les deux charnières rectilignes (h) et (h') sont installées au niveau inférieur des chants de jonction de (b) et (c) avec (a), de telle façon que dans leur configuration, même si aucun verrouillage supplémentaire n'était prévu entre le plateau (a) et les parties latérales (b) et (c), la trottinette resterait compacte pendant son utilisation en raison du poids de l'utilisateur.

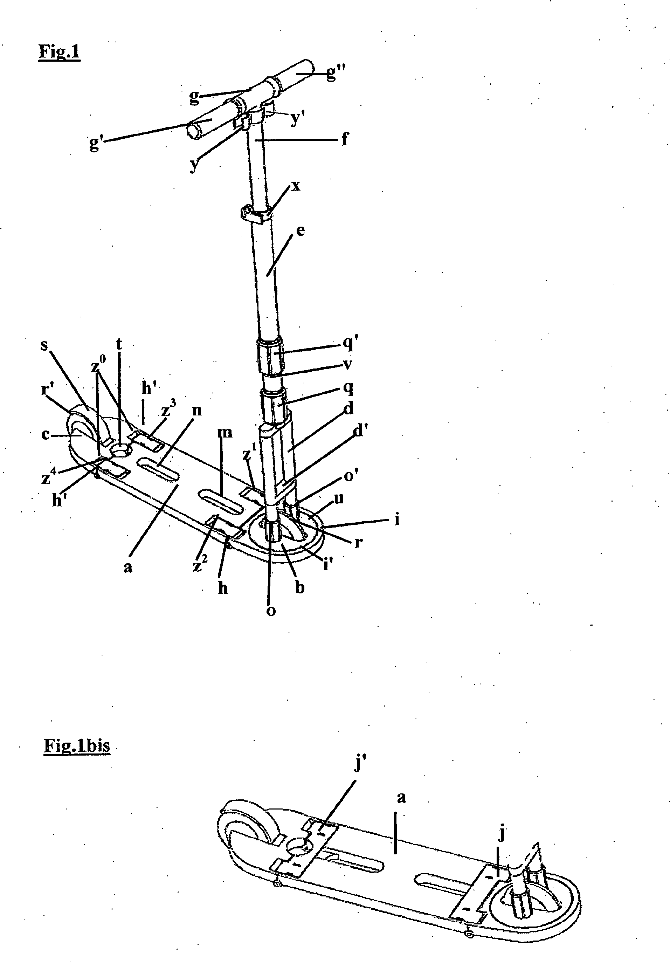

A noter que la charnière arrière (h') (fig.1/pl.1) est interrompue, dans sa partie centrale, de la valeur du diamètre d'un trou cylindrique médian (t) à cheval diamétralement entre (a) et (c), dont la fonction sera décrite plus loin.

Autrement dit la charnière (h') opère en deux parties en ligne et symétriques par rapport au centre du trou (t) percé de telle façon que la ligne de charnière entre (a) et (c) soit diamétrale de (t).

A noter que ce trou médian pourrait aussi être prévu oblong, et disposé longitudinalement en deux volumes égaux sur (a) et (c), en symétrie par rapport à une largeur médiatrice coïncidant avec la ligne de jonction de (a) et (c), dans le but de l'optimisation de sa fonction, comme il sera exposé plus loin.

Le verrouillage coplanaire (fig.1) de (a) avec (b) d'une part, et de (a) avec (c) d'autre part, est assuré respectivement par deux grenouillères (z¹) et (z²) entre (a) et (b) ainsi que par deux grenouillères (z³) et (z⁴) entre (a) et (c).
(z¹) et (z²) sont identiques et symétriques par rapport à une ligne médiane qui couperait longitudinalement (a) ; de même que (z³) et (z⁴), à l'opposé sur le plateau (a).

Les mécanismes à bascule de ces grenouillères sont tous les quatre implantés sur le plateau central (a), et les verrouillages, proprement dits, s'effectuent en les mettant en tension par basculement, après leurs accrochages à l'intérieur d'encoches (z⁰) (fig.1 / pl.1) en vis à vis sur les plateaux latéraux (b) et (c).

Préférentiellement pour des raisons générales de simplification, les quatre grenouillères du brevet sont prévues identiques.

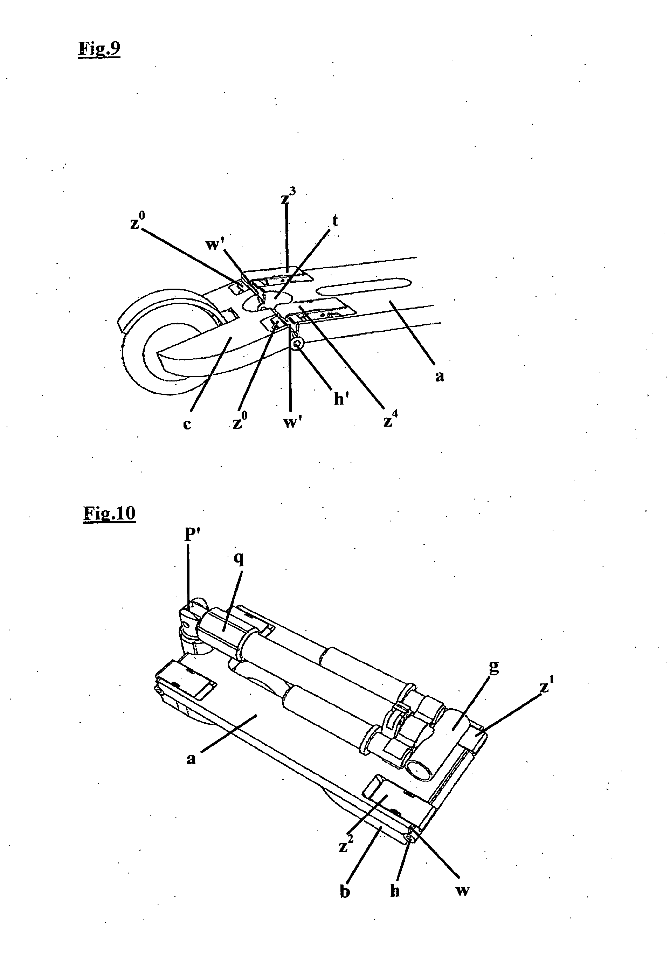

La figure 9 / pl.6 montre avec plus de détails comment, spécifiquement, opèrent en basculement les grenouillères (z³) et (z⁴) pour le verrouillage coplanaire de (a) et (c).

Sur cette même figure, un silentbloc (w') en caoutchouc, néoprène, ou autre matériau spécifique, aménagé sur chant de (a) ou de (c), soit entre (a) et (c) le long de la charnière (h'), interrompu de même que cette charnière par le trou (t), solidarisé à (a) ou à (c) par collage ou clipage sur le chant choisi, est destiné d'une part à maintenir le verrouillage de (z³) et (z⁴) en tension, et rendre ainsi l'assemblage coplanaire plus souple par effet amortisseur de très courte amplitude, d'autre part à minimiser les bruits éventuels de frottement entre (a) et (c) pendant l'utilisation de la trottinette.

Entre (a) et (b) (fig10 / pl. 6), existe de même un silentbloc (w), d'un seul tenant pour le même office après verrouillage de (z¹) et (z²).

La figure Ibis / pl.1 présente deux dispositifs identiques de jonction regroupant (z¹) et (z²) d'une part et (z³) et (z⁴) d'autre part ; ces dispositifs (j) et (j'), nichés dans le plateau (a) et affleurant au niveau de sa face supérieure, consistent simplement en deux liaisons respectives des leviers de (z¹) et (z²), et de (z³) et (z⁴).

Ils permettent d'un seul mouvement de verrouiller ou de déverrouiller ensemble (z¹) et (z²), et (z³) et (z⁴), les déverrouillages étant facilités par la possibilité de soulever ces leviers de liaison, l'un après l'autre, par un doigt glissé sous la partie centrale de chacun d'eux, en y accédant en bout des ouvertures oblongues des roues où ils aboutissent ; (j) et (j') sont dimensionnés pour ne pas gêner le positionnement des roues dans ces ouvertures lors de la première phase du pliage de la trottinette, décrite plus haut.

Les verrouillages avant et arrière peuvent facilement être réalisés par enfoncement /clipage avec la pointe du pied ou le talon des leviers (j) et (j'), une fois la trottinette ouverte et posée au sol pour sa mise en service.

A noter que préférentiellement (b) et (c) sont théoriquement prévus de mêmes épaisseurs que (a).

Une fois (b) et (c) rabattus à plat sur (a), comme le montre la figure 2 / pl.2, les roues avant et arrière (r) et (r') venant respectivement se loger dans les ouvertures (m) et (n), la première étape du pliage de la trottinette est réalisée.

La seconde étape du pliage (fig.3/pl.2) consiste à dévisser les deux manchons filetés intérieurement (o) et (o') qui fixent l'étrier de direction (d), (renforcé par une liaison horizontale (d') entre ses deux bras verticaux), sur la platine rotative (u), en symétrie de part et d'autre de la roue (r). L'étrier monobloc (d) constitue la partie basse de la colonne de direction de la trottinette ; il est fixe et se prolonge verticalement (fig.1/pl.1) jusqu'au guidon (g) par une partie cylindrique télescopique constituée d'un élément fixe (e) et d'un élément coulissant (f) dans (e).

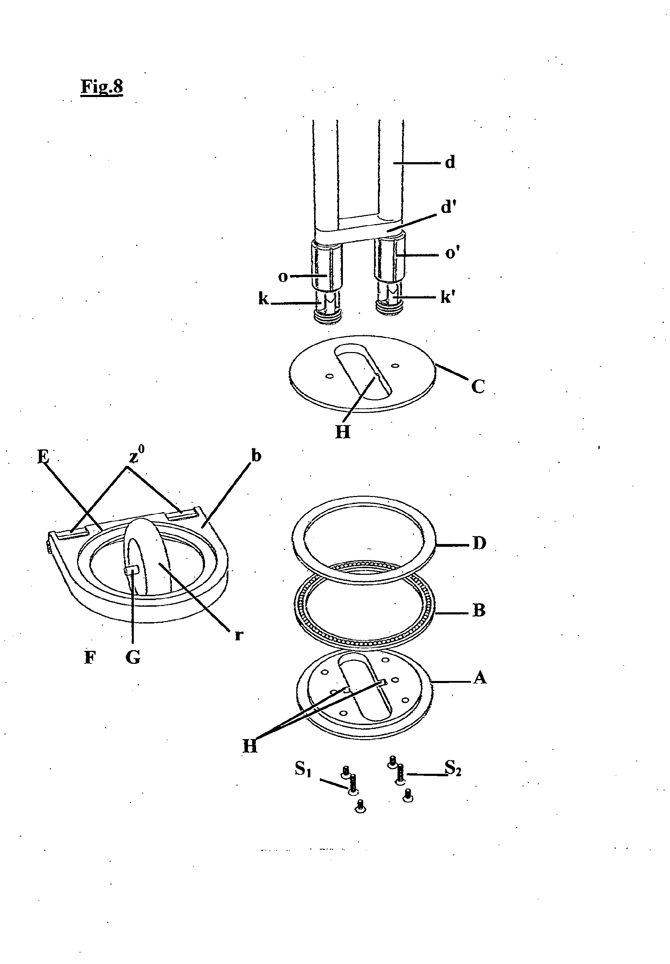

L'étrier (d), par un moyen défini plus loin, entraîne la platine rotative (u) (fig.1 / pl.1), qui installée de préférence, par souci d'équilibrage, concentriquement au périmètre de la portion d'arc semi-circulaire (i) du plateau (b), en hypercentre de cette portion, constitue un empilement mécanique fonctionnant à l'horizontal, composé d'éléments circulaires concentriques, prisonniers / rotatifs du plateau (b) aménagé dans toute son épaisseur d'une ouverture circulaire faisant office de cage de roulement, et dont l'élément essentiel est un ensemble cylindrique constitué de deux systèmes opposés de roulement à billes (ou autre moyen que billes) opérant à 360°, et disposés symétriquement sur les deux faces (E) et (F) (fig.8/pl.5) d'une même collerette aménagée à mi-épaisseur de l'ouverture circulaire de (b) ; le platine rotative (u) ayant entre autres fonctions majeures d'intégrer verticalement, prisonnière au centre de son volume, la roue avant (r) avec son axe horizontal de rotation (G), fixe ou mobile.

La même figure 8 / pl.5 détaille la platine rotative (u) en ses divers éléments empilés pour le résultat recherché de la mobilité de la roue (r) avant à 360° ; différents autres empilages de pièces circulaires différemment agencées de roulements ou autres moyens de rotation limitant les frottements, permettraient des résultats équivalents.

Sur la figure 8 / pl.5, (E) et (F) sont les deux faces d'une collerette circulaire épaisse, intégrée horizontalement en épaulement à la masse du plateau avant (b), et à mi-épaisseur de celui-ci. (E) et (F) sont porteuses de la platine rotative (u), prisonnière de (b), constituée elle-même de deux ensembles ajustés identiques, circulaires et rotatifs par le moyen de roulements, logés en symétrie, l'un contre la partie inférieure (F) de la collerette, l'autre contre la partie supérieure (E) de la collerette.

Le premier ensemble comprend un élément circulaire (A) aménagé longitudinalement d'une ouverture centrale oblongue pour passage de la roue avant (r), ouverture elle-même pourvue latéralement de deux supports d'axe de roue creux (H), semi-cylindriques, médians, face à face.

(A) porte ajusté, épaulé en couronne périmétrique, un roulement (B) à fonction horizontale et à billes actives unilatéralement ou bilatéralement. ((B) et (D) sur la figure 8 / pl.5 sont présentés en roulements à billes actives horizontales unilatérales).

L'ensemble ajusté (A) + (B) vient se positionner prisonnier rotatif sur la face (F) de la collerette épaulée à mi-épaisseur de (b).

De même le plateau (C) et son roulement (D) ajusté sur lui, épaulé en couronne périmétrique forment un second ensemble identique au premier, qui vient se positionner prisonnier rotatif sur la face (E) (opposée à la face (F)) de la même collerette, symétriquement au premier ensemble. Le calcul des diamètres et des épaisseurs des différents éléments empilés constituant (u) doit être étudié pour que :
- les roulements (B) et (D) tournent librement, préférentiellement dans deux gorges circulaires symétriques à aménager sur les deux faces opposées (E) et (F) de la collerette intégrée à mi-épaisseur de (b) (gorges non représentées dans les dessins), et cela pour éviter tous frottements radiaux contre les deux parois cylindriques verticales aboutissant respectivement à chacun des diamètres extérieurs des deux faces opposées (E) et (F) de la collerette,
- la face supérieure de (A) s'ajuste en contact contre la face inférieure de (C) de même surface, les ouvertures oblongues de passage de la roue avant (r) sur (A) et (C) coïncidant alors parfaitement, et matérialisant entre eux, en coïncidence aussi, face à face, deux logements cylindriques opposés, dont la fonction est d'insérer les deux extrémités (G) de l'axe de roue avant (r), ces deux logements étant constitués par les quatre demi-cylindres creux identiques (H), diamétralement agencés, deux à deux, face à face et en symétrie par rapport au plan médian de contact entre (A) et (C) de part et d'autre de l'ouverture du passage de la roue (r), comme déjà mentionné.

Pour maintenir l'ensemble des éléments décrits ci-dessus, en sandwich, prisonniers rotatifs en appui roulement contre (E) et (F), c'est à dire de part et d'autre de la collerette épaulée à mi-épaisseur de (b), et dans la superposition proposée incorporant la roue et son axe, on utilise deux vis longues (S₁) et (S₂) de haute résistance, préférentiellement de type têtes fraisées hexagonales creuses ou têtes cylindriques hexagonales creuses, traversant les épaisseurs contigües de (A) et de (C) pour se fileter verticalement à fond, respectivement en bout de chacun des deux bras de l'étrier (d), symétriquement de part et d'autre de la roue maintenue verticale sur son axe horizontal.

Une fois le vissage/blocage de (S₁) et (S₂) effectué, solidarisant horizontalement en deux points de fixations parallèles la platine rotative (u) portant la roue (r), aux deux bras de l'étrier (d), base de la colonne de direction, il convient préférentiellement que les têtes des vis se trouvent noyées / affleurantes sur la face externe de (A).

Les deux manchons (o) et (o') (fig.3 / pl.2) dévissés vers le haut de la partie inférieure de l'étrier (d), sous la liaison horizontale de renfort (d'), libèrent respectivement au bas de l'étrier deux joints de cardans cylindriques simples (k) et (k'), constitués chacun de deux articulations cylindriques symétriques, filetées chacune extérieurement pour opérer avec le filetage intérieur des manchons (o) et (o') correspondants.
(k) et (k') se trouvent respectivement vissés / bloqués par les deux bases de leurs deux articulations inférieures, sur la platine rotative (u) (à travers cette platine) par les vis (S₁) et (S₂).
(o) et (o') restent respectivement fixés au-dessus de (k) et (k') par vissage sur le filetage extérieur de leur articulation supérieure, à une distance de la platine (u) qui permet de ne pas entraver le basculement de l'étrier vers l'extérieur du plateau (b) de la trottinette, de fait dans le prolongement d'une ligne médiane traversant longitudinalement et consécutivement (c), (a) et (b) ; ce basculement est rendu possible par le moyen de la libération des articulations des joints de cardans cylindriques simples (k) et (k') ; en fin de rabattement (fig.3bis/pl.2) de l'étrier, celui-ci en position horizontale parallèlement à (a), à plat contre les faces inférieures des parties (b) et (c) déjà elles-mêmes rabattues à plat contre la face inférieure de (a) lors de la première phase de pliage, vient coiffer en lucarne la roue arrière (r') de la trottinette surmontée de son frein, et partiellement logée dans l'ouverture (n) (fig.2 ,3 et 3bis/pl.2).

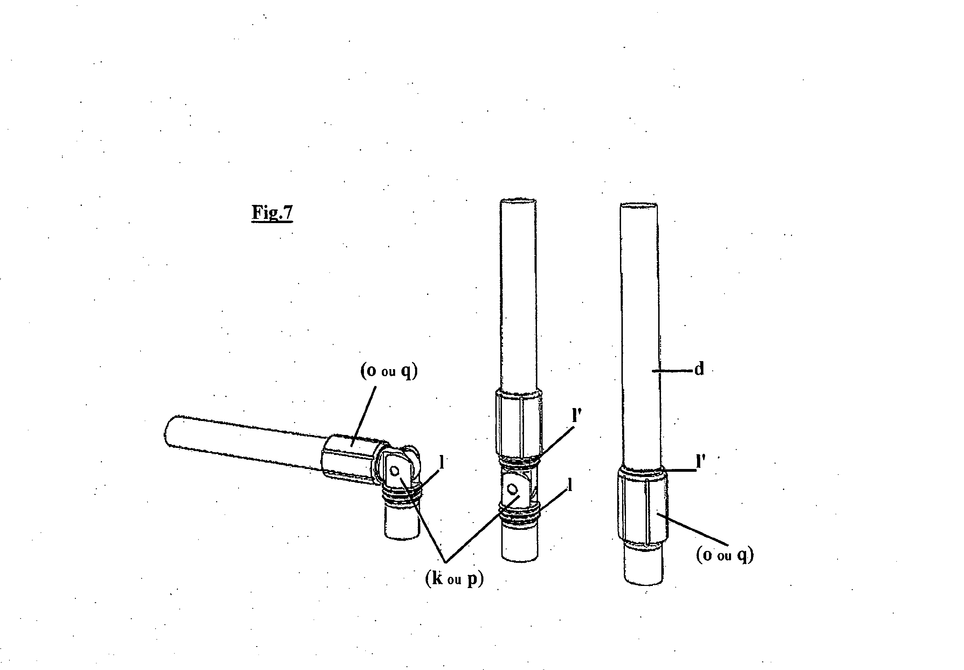

La figure 7 / pl.4 détaille le fonctionnement d'un joint de cardan cylindrique simple (k) (identique à (k')) composé de deux articulations axiales cylindriques symétriques permettant dé passer de la verticalité à 90°, et munies chacune d'un filetage externe bas (1) et d'un filetage externe haut (l'), opérant tous les deux avec le filetage total interne d'un manchon (o), destiné d'une part à maintenir bloquées en ligne les deux articulations symétriques d'un joint de cardan, par vissage complet du manchon les englobant ensemble, et d'autre part à maintenir le manchon fixement vissé au-dessus de l'articulation du joint de cardan, après sa libération pour permettre son fonctionnement.

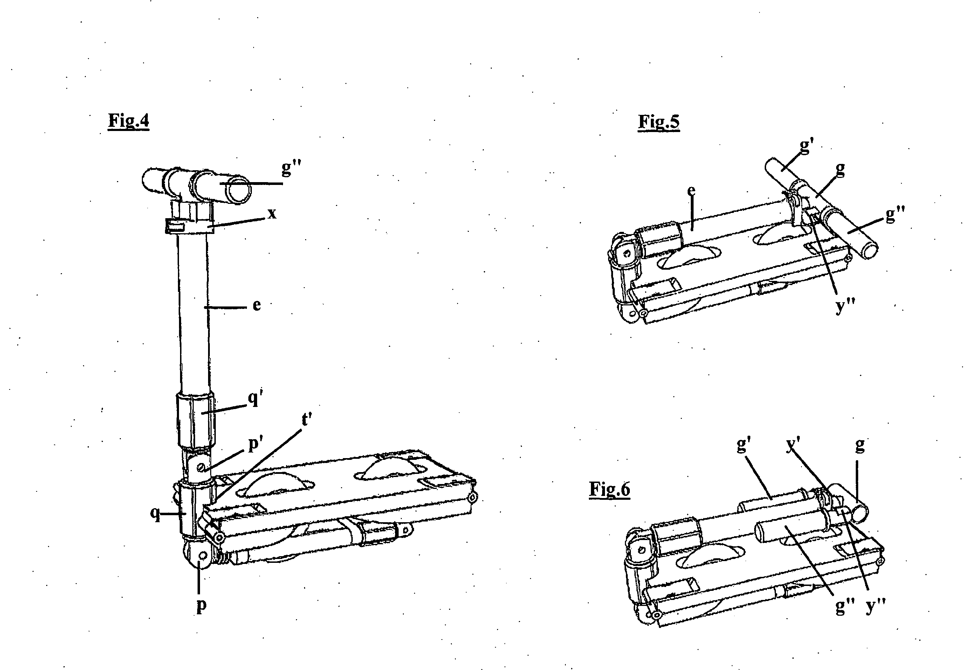

Les joints de cardans identiques (p) et (p') et leurs manchons respectifs (q) et (q') (fig.4 / pl.3), dont il sera question dans les lignes suivantes, opèrent séparément dans les mêmes conditions.

La figure 3 / pl.2 montre que l'étrier (d) est centralement, perpendiculairement et solidairement prolongé par le segment suivant (e) de la colonne de direction, lequel porte à sa base deux manchons filetés consécutifs (q) et (q'), identiques, mais de plus gros diamètre que (o) et (o'):

Ces manchons (q) et (q') (fig.4 / pl.3) complètement filetés à l'intérieur, recouvrent et maintiennent respectivement, solidement en ligne, deux joints de cardans cylindriques simples (p) et (p') de conception identique à (k) et (k'). Ces deux joints de cardans (p) et (p') constitués chacun de deux articulations cylindriques symétriques portant à chaque extrémité un filetage extérieur, opérant avec le filetage intérieur d'un manchon, et reliés entre eux par une portion cylindrique fixe (v) (fig.3 / pl.2) conditionnent l'exécution de la troisième et dernière phase du pliage de la trottinette de la façon suivante :
Le joint de cardan simple (p) est, par son articulation inférieure, solidement fixé verticalement par vissage bloqué au-dessus et au centre de l'étrier (d), partie inférieure de la colonne de direction.

Les deux articulations du joint de cardan simple (p) sont libérées par le dévissage du manchon (q) fileté intérieurement qui remonte alors dans la direction du guidon, et reste fixé, fileté au-dessus de la partie cylindrique intermédiaire (v) entre (p) et (p').

La fig.4 / planche 3 montre le cardan simple (p) libéré, et positionné en angle droit de telle façon que le manchon (q), recouvrant alors la partie cylindrique intermédiaire (v), et fixé par son filetage intérieur sur l'articulation supérieure de (p), vienne, dans cette angulation, occuper verticalement, à mi-volume, l'épaisseur de l'échancrure semi-cylindrique (t'), obtenue après le rabattement à plat de (c) sur (a), lequel transpose le trou (t) médian entre (c) et (a), avant le rabattement, en l'échancrure (t') après. Comme on le voit sur la fig.4 planche 3, le trou (t) étant cylindrique, le manchon (q) est en débordement de l'échancrure (t') c'est à dire dépassant nécessairement à mi-volume de cette échancrure; comme déjà mentionné, avec un trou (t) (fig1/pl.1) oblong, le manchon (q) en position verticale peut être ajusté sans déborder de l'échancrure (t'), ce qui est un avantage à la fois de volume et d'esthétique.

De même le dévissage du manchon (q') libère le joint de cardan simple (p') et reste, par son filetage interne, vissé au-dessus de lui sur le filetage externe de son articulation supérieure, en débordant sur le tube (e) qui prolonge verticalement l'étrier (d) au-delà des deux joints de cardans.

Les deux articulations du joint de cardan (p') libérées, permettent le basculement en angle droit, parallèlement aux plateaux (b) et (c) rabattus sur (a), du tube (e) incorporant, coulissant, le segment (f), au-dessus des roues (r) et (r'), dépassant légèrement du plan supérieur de (a), ce qui met un terme à la troisième et dernière étape du pliage (fig.5 / pl.3). Il suffit alors pour aboutir à l'encombrement minimum de la trottinette pliée, d'ouvrir l'attache annulaire de serrage (x) (fig.1/pl.1) à l'extrémité haute du tube (e) partie centrale de la colonne de direction pour y faire coulisser à l'intérieur la partie télescopique (f) qui se solidarise au centre du guidon (g), dont les deux extrémités symétriques et préférentiellement cylindriques (g') et (g"), fixées de part et d'autre de (g) par un moyen connu tel que celui de butées à billes, peuvent être retirées et insérées par clipage respectivement dans les deux anneaux ressorts verticaux (y') et (y") (fig.6/pl. 3) aménagés sous le guidon (g).

L'ultime opération consiste à resserrer l'attache annulaire (x) pour emprisonner (f) dans (e) (fig.1/pl.1).

Pour maintenir compacte la trottinette du brevet une fois pliée, on pourra mettre en oeuvre un moyen simple et rapide de clipage au niveau du guidon, parmi les nombreux connus.

Il faut bien noter que l'une des caractéristiques originales de la trottinette du brevet est que sa colonne de direction est agencée pour son pliage en deux parties positionnées de part et d'autre des plateaux. C'est à cette caractéristique que l'on doit d'obtenir une hauteur suffisante de colonne de direction pour l'utilisation de la trottinette par les adultes, les adolescents et les enfants.

Dans cette configuration, on obtient un pliage à quatre étages d'éléments parallèles : deux étages pour les plateaux rabattus, (b) et (c) à plat contre (a), et deux étages pour la colonne de direction en deux parties, de part et d'autre, des plateaux rabattus : l'étrier (d) en lucarne d'un côté et la partie télescopique (e) + (f) + (g) de l'autre (fig.3bis/pl.2 et fig.6/pl.3).

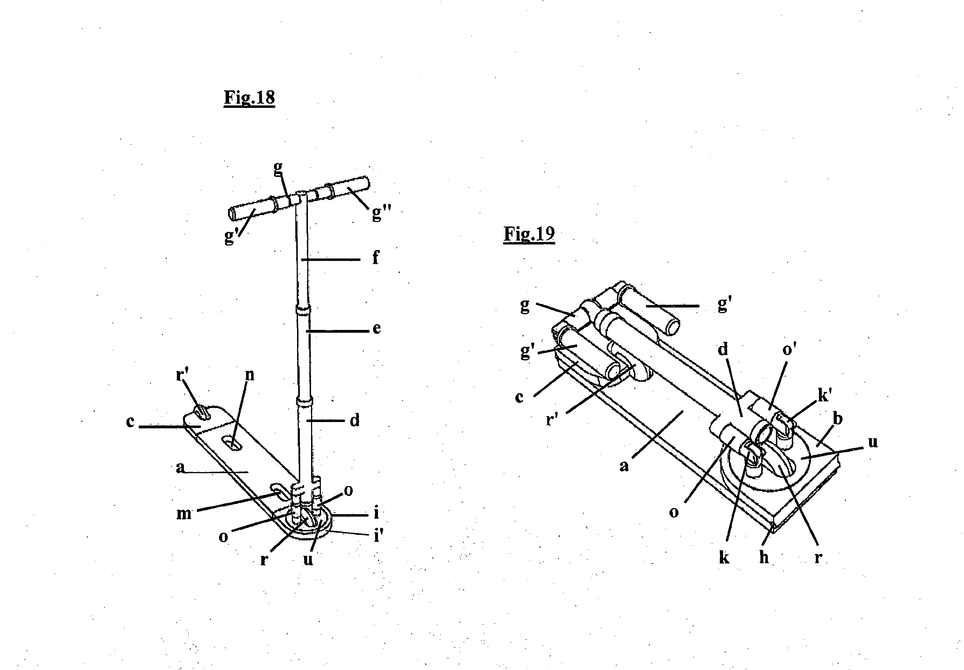

Pour une trottinette selon le brevet, mais dont l'usage serait ciblé sur les enfants de 7-8 ans à 12-13 ans, la colonne de direction serait beaucoup moins longue que pour les adultes et pourrait être aménagée pour n'être pliée que d'un seul côté comme le montre les fig. 18, et 19 planche 10.

Sur ces figures, on voit que :
- la colonne de direction (fig.18/pl.10) est constituée de trois tubes télescopiques, (d), (e) et (f), (l'étrier (d) étant ici configuré pour en être le tube majeur) et le dernier (f) aboutit et se solidarise centralement au guidon (g) prolongé de part et d'autre de ses deux poignées rétractables (g') et (g") ; par exemple, dans une configuration particulière à l'usage des enfants, si la longueur du plateau (a) de la trottinette est d'environ 30 cm, et que le diamètre des roues reste de 10 cm, la colonne de direction en trois portions télescopiques amène le guidon à environ 85 cm du sol, et cette hauteur couvre largement tout le champ de l'utilisation par les enfants de 7 à 13 ans,
- la configuration enfants (fig.19/pl.10) de la colonne de direction nécessite donc seulement un pliage à trois étages d'éléments parallèles, deux étages pour les plateaux rabattus, (b) et (c) à plat contre (a), mais un seul étage pour la colonne de direction en trois parties télescopiques (d), (e) et (f), prolongée du guidon (g).

Ainsi, la trottinette enfant, selon le brevet, se caractérise après pliage par un encombrement des plus réduits, permettant son transport à l'intérieur d'un sac d'écolier, lequel peut à son tour être transporté clipé sur la trottinette, par un système classique.

Il existe par ailleurs quelques moyens susceptibles d'améliorer la robustesse, la sécurité, le confort, et l'esthétique de la trottinette du brevet :
- la robustesse de la trottinette du brevet est évidemment liée à la solidité de la platine rotative (u), mais ce problème trouve une solution appropriée dans la configuration compacte de la cage de roulement de part et d'autre de la collerette circulaire solidaire du plateau (b) à mi-épaisseur de celui-ci ; la robustesse de la trottinette est plus principalement dépendante de la résistance des charnières (h) et (h') (fig.1/pl.1) pendant son utilisation ; pour la réalisation de ces charnières, le calcul du nombre de gonds en bout de chaque plateau, de leurs dimensions, du diamètre de leurs axes par rapport aux matériaux choisis est essentiel car il doit rendre possible l'utilisation de la trottinette dans tous les domaines où elle est sollicitée à l'extrême dans sa résistance mécanique ; outre cela, il convient au surplus de protéger la ligne de charnière par des moyens additionnels contre tous risques de cisaillement et/ou d'arrachement pouvant exister particulièrement lorsque l'utilisateur exécute une chute verticale, en fin de laquelle les deux roues arrivent pratiquement au même instant sur un plan horizontal, ce qui constitue le risque majeur de casse des charnières.

En effet, dans ce cas la force exercée instantanément sur le plateau (a) lors du contact avec le sol est exponentielle par rapport au poids de l'utilisateur et se calcule par une formule complexe en fonction d'un grand nombre de paramètres parmi lesquels les plus importants sont : le poids de l'utilisateur, la vitesse de la trottinette, la hauteur de la chute, la longueur entre les deux axes de roue, la durée d'écrasement des deux roues au sol, la nature du sol.

Si le choix optimal des matériaux utilisés pour la fabrication, en particulier des plateaux (a), (b) et (c) de la trottinette, (fig.1/pl.1), est important à prendre en compte, il n'assure pas totalement contre la résistance à l'arrachement en même temps qu'au cisaillement les deux lignes de charnières (h) et (h') (fig.1) à l'instant d'une chute verticale, voire oblique, de la trottinette sur un sol dur, cas très fréquents.

On peut toujours renforcer les deux lignes de charnières (h) et (h') en majorant leurs dimensions jusqu'à une limite fonctionnelle acceptable par rapport aux matériaux les constituant ; en particulier, on peut grossir les diamètres des axes et choisir pour ces axes des aciers de très haute résistance, et des essais techniques pourront confirmer une robustesse suffisante.

Dans la configuration des plateaux (a) et (b), et (a) et (c), il existe un moyen de protéger les charnières contre le cisaillement ou l'arrachement en absorbant en grande partie la très importante force verticale qui s'exerce sur le plateau (a) lors d'une chute sur sol dur.

Ce moyen consiste dans l'aménagement sur les deux chants charnières de (a) et dans la masse de (a), d'excroissances destinées à venir s'encastrer dans les chants opposés sur (b) et (c) au-dessus des charnières.

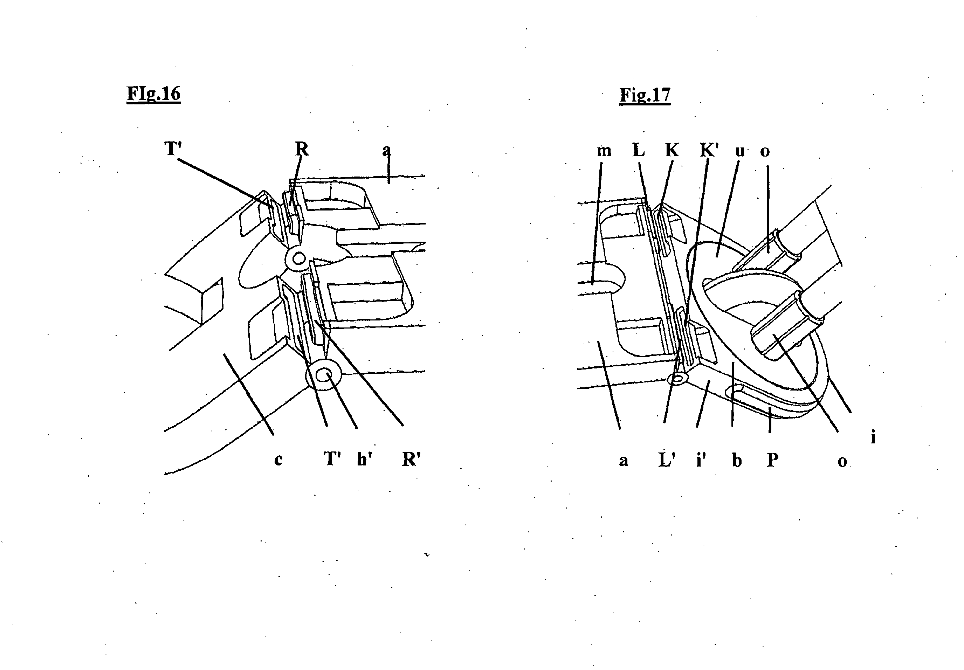

Les figures 16 et 17 / pl.9 montrent quatre excroissances de dimensions égales, (L) et (L'), symétriques entre elles côté charnière entre (a) et (b), et (R) et (R') symétriques entre elles côté charnière entre (a) et (c).

Au moment du dépliage de la trottinette, (L) et (L') d'une part et (R) et (R') d'autre part viennent s'encastrer, ajuster dans quatre ouvertures femelles de volumes équivalents, aménagées face aux quatre excroissances, (K) et (K') sur (b), et (T) et (T') sur (c). Une fois (a), (b) et (c) verrouillés coplanairement entre eux par les grenouillères correspondantes, les quatre encastrements bilatéraux de (a) à l'intérieur des plateaux (b) constituent au-dessus des lignes de charnières, une puissante protection des charnières au cisaillement comme à l'arrachement.
- pour ce qui est de la sécurité, la configuration du plateau avant (b) (fig.1) permet d'installer sur la longueur du chant de l'arc extérieur (i'), par collage ou clipage, une bande épaisse (P) (fig.17/pl.9), en caoutchouc, néoprène ou autre matériau souple-dur de même usage, cette bande faisant office de pare-chocs.

A noter que ce moyen de protection de la roue avant est exclusif du concept de la trottinette du brevet, les roues avant des trottinettes étant toutes à découvert.

Pour ce qui est du confort, rappelons d'abord que la trottinette du brevet a pour importante caractéristique, toutes obligations de sécurité respectées, d'être utilisable à la fois par les adultes et les enfants, grâce à la spécificité particulière de sa hauteur de direction télescopique pouvant varier de 65 cm à 1 m, et d'être facilement pliable manuellement dans un volume très réduit.

Pour aboutir à ce volume très réduit en maintenant des dimensions compatibles avec une utilisation pour les adultes, et les adolescents, il convient que le diamètre des roues soit prévu aux alentours de 10 cm.

Dans ce cas, la trottinette se trouve à une hauteur d'environ 5 cm du sol pour son utilisateur ; à cette hauteur, il y a peu de risque de déhanchement pour la jambe active, et le patinage est donc facilité et confortable.

Néanmoins cette garde au sol de 5 cm peut encore être abaissée pour les plus jeunes ; pour cela il suffit de chanfreiner le plateau (a) au niveau des chants opposés de ses deux largeurs, en dégageant symétriquement de part et d'autre, la valeur d'un angle planaire de section de quelques degrés (5° à 7°) entre les plans des chants des plateaux (a) et (b) d'une part, et des plateaux (a) et (c) d'autre part, ces deux angles planaires de section, préférentiellement équivalents entre eux, ayant chacun pour ligne de sommet la ligne de charnière correspondante.

On peut optimiser cette opération en chanfreinant les quatre chants de contact entre (a) et (b) d'une part et (a) et (c) d'autre part, pour la même valeur d'angle de plan de section (2,5° à 3,5°).

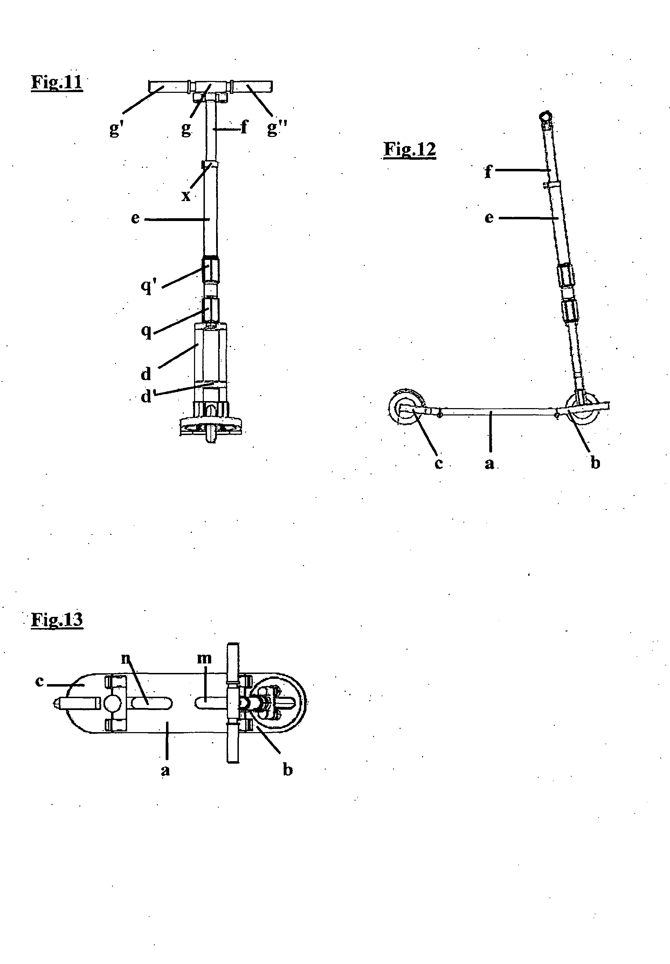

Les résultats de l'une ou l'autre opération pour lesdites valeurs angulaires sont d'une part l'abaissement du plateau (a) à environ 3,5 à 4 cm du sol, d'autre part l'inclinaison de la direction à environ 5° à 7° vers l'utilisateur. Les figures 11, 12, 13 / pl.7 illustrent ce résultat.

A titre d'exemple : lorsque le plateau (a) se situe à 3,5 cm du sol si le guidon se trouve à lm du sol, il avance d'environ 10 cm vers l'utilisateur.

Une amélioration supplémentaire du confort consiste dans la possibilité, entre deux périodes actives, de faire reposer le pied mobile de l'utilisateur sur un petit support horizontal, rétractable, verticalement aménagé en affleurement dans l'épaisseur de l'un des deux supports verticaux constituant l'étrier (d), à droite pour un droitier, à gauche pour un gaucher.

L'extrémité d'un tel support, en position active, ne doit pas dépasser, en projection, le plan du plateau (b) au-dessus duquel il se trouve.

Cette possibilité n'est pas montrée dans les dessins.

Pour ce qui est de l'esthétique, la trottinette du brevet (pliée comme dépliée) matérialise de fait des formes fonctionnelles nouvelles. Ces formes, consécutivement courbes et linéaires présentent un large potentiel de design dont nous retiendrons deux applications :
1) Rien n'empêche que le plateau (c) portant la roue arrière (r') munie de son frein (s) soit de même dimension que le plateau avant (b) portant la roue (r), voire identique, ce qui apporterait une parfaite symétrie de (b) et (c) par rapport à (a).
2) Si on considère la trottinette complètement repliée, dans leur dernière portion télescopique, les deux tubes de direction coulissants (e) et (f) (fig.1), de formes cylindriques, se trouvent l'un dans l'autre en position fixe au-dessus des roues ; on peut alors imaginer d'aménager en coïncidence sur les deux tubes ensembles, deux ouvertures longitudinales consécutives, à la verticale des roues, d'une largeur d'échancrure leur permettant de juste recouvrir, en position sécante, les dépassements des deux roues du plan supérieur du plateau (a), les dissimulant pratiquement à la vue.

La solution d'une seule ouverture recouvrant les deux roues, comme la solution de deux tubes longitudinalement ouverts coulissant l'un dans l'autre, fragiliseraient le segment télescopique, pour lequel il conviendrait alors, en compensation, d'utiliser des diamètres plus importants ou des métaux de haute résistance mécanique.

L'aménagement des ouvertures longitudinales telles que décrites ci-dessus n'est pas montré dans les dessins.

Enfin, bien que les deux ouvertures oblongues du plateau (a) soient de faible largeur (l'épaisseur d'une roue très légèrement par excès) et ne puissent présenter aucun danger de passage à travers, ni surtout d'entrave latérale du pied fixe, pour l'esthétique du plateau il pourrait convenir de les occulter pendant le temps de l'utilisation de la trottinette. Pour ce faire il suffirait de fixer en épaulement / affleurement sur les deux ouvertures, deux caches clipés de mêmes dimensions, de faibles épaisseurs, obtenus de préférence par injection de matière plastique.

Au moment du pliage, ces deux caches pourraient être dégagés des ouvertures et rangés verticalement dans les deux parties détachables (g') et (g") du guidon (g).

Les caches définis ci-dessus ne figurent pas dans les dessins.

Accessoirement, ces caches, sur leur face externe, pourraient être striés pour rendre le plateau (a) (fig.1/pl.1) antidérapant, celui-ci pouvant être lui-même strié entre les deux caches pour une continuité des stries.

Les planches 12, 13 et 14 présentent trois options permettant de rendre le pliage et le dépliage de la trottinette beaucoup plus rapides, pratiquement semi-automatiques :
Pour les pliages et dépliages rapides de la colonne de direction, il convient de remplacer les deux cardans simples (q) et (q') (fig.1/pl.1) par une unique charnière facilement verrouillable et déverrouillable au moyen d'un dispositif que nous appelleront « doigt à billes » (Dab) (fig.20 et fig.21/pl.11).

Ce dispositif consiste en un cylindre évidé dans lequel opère verticalement à une extrémité un piston/ressort permettant de produire un fort verrouillage en activant simultanément par un dispositif intérieur au cylindre deux billes symétriquement opposées, prisonnières du cylindre.

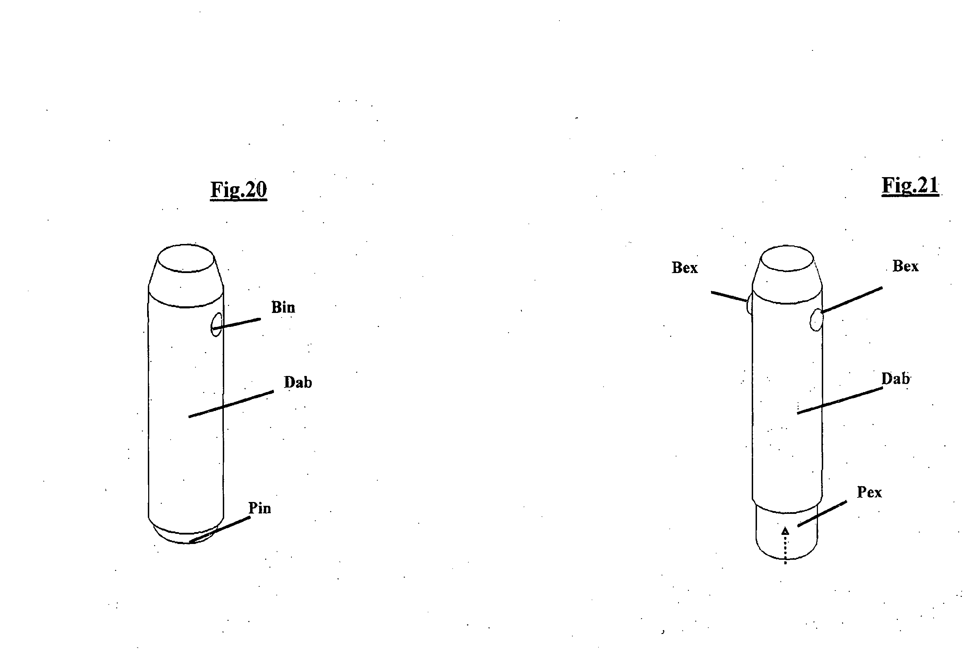

Quand le piston/ressort est en position interne (Pin) (fg.20/pl.11), les deux billes (Bin) affleurent sans dépassement à la surface externe de la paroi du cylindre du doigt à billes ; Quand le piston/ressort est en position externe (Pex) (fig.21/pl.11), les deux billes (Bex) (fïg.21/pl.11) se bloquent en dépassement fixe de la surface externe de la paroi du cylindre, ce qui permet d'emprisonner et de verrouiller diamétralement et radialement le long du doigt à billes toute pièce mécanique préférentiellement bi-plane (type rondelle), dont le diamètre intérieur de perçage équivaut au diamètre extérieur du cylindre du doigt à billes, tout en restant prisonnières/bloquées à l'intérieur du doigt à billes.

Le piston/ressort reste toujours externe après un verrouillage ou un déverrouillage.

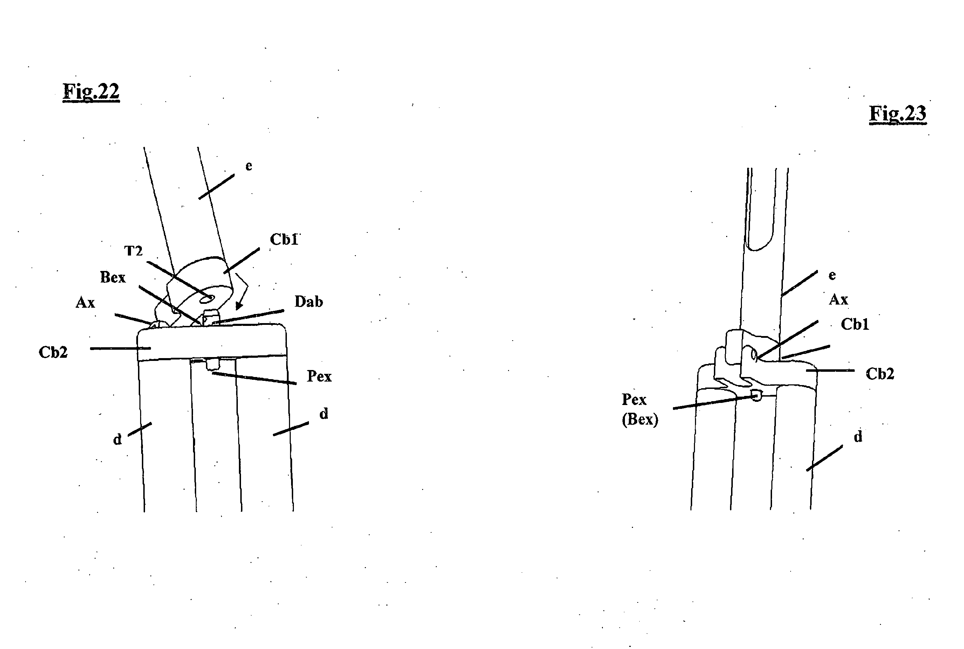

Pour les pliages et dépliages rapides, voire automatiques de la colonne de direction, l'installation d'un doigt à billes (Dab) (fig.22/pl.12), fixé centralement et verticalement dans le corps de la partie fixe de la charnière (Cb2) (fig.22/pl:12), permet de maintenir la charnière fermée, donc la colonne de direction bloquée en ligne (fig.23/pl.12), les deux billes (Bex) (fig.22/pl.12), diamétrales, se trouvant alors en position externe bloquée dans une ouverture circulaire centrale appropriée (Tr) (fig.22/pl.12) de la partie mobile (Cb1) de la charnière. Une simple pression sur le piston/ressort (Pex) (fig.22/pl.12) du doigt à bille permet automatiquement le verrouillage de la charnière, et en suivi, le pliage de la colonne de direction.

Préférentiellement, au moment du pliage, la pression du piston/ressort peut-être automatiquement exercée, une fois les deux éléments de la colonne de direction mis en ligne de part et d'autre de leur charnière commune (Cb1)/(Cb2), par l'action du tube télescopique interne (f) (fig.1/pl.1) à la partie cylindrique haute de la colonne de direction (e) (fig.1/pl.1), venant alors en butée sur le piston / ressort d'un doigt à billes fixé centralement dans la partie mobile (Cb1) de la charnière, ce qui permet le déverrouillage automatique de celle-ci en fin de rétractation du tube télescopique (f).

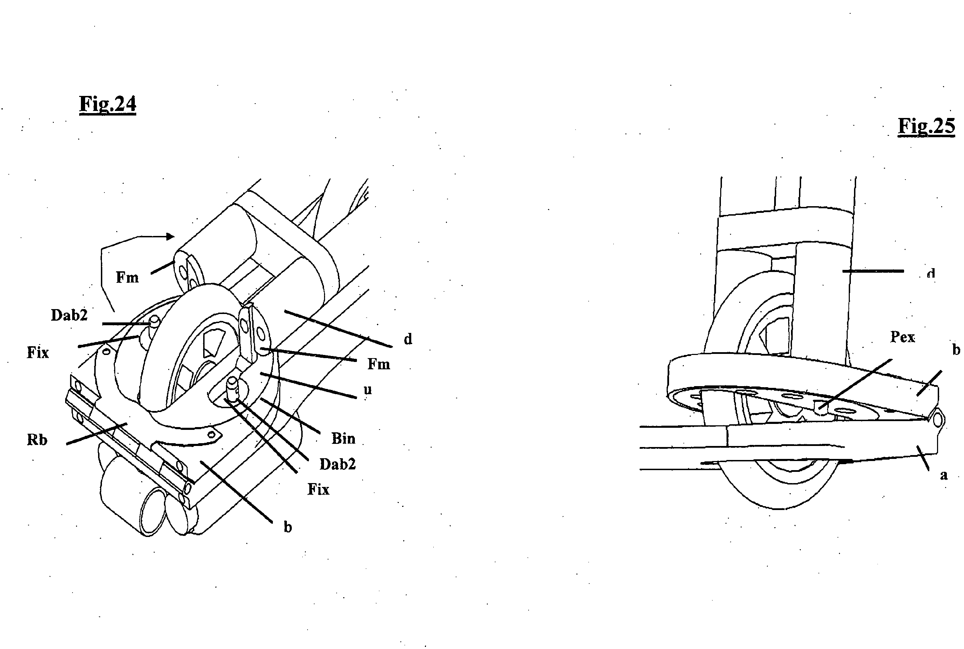

Pour les pliages et dépliages rapides de l'étrier (d) constitué de deux bras cylindriques verticaux (fig.1/pl.1) reliés entre eux et aboutissant à la platine horizontale mobile (u) (fig.1/pl.1), il sera adapté à la base de chacun d'eux, en remplacement des deux cardans simples (k) et (k') (fig.19/pl.10), un système de deux charnières identiques, comparables à celle de la figure 22 / pl.12, et représenté par la figure 24 / pl.13.

On voit sur cette figure que les cardans simples symétriques (k) et (k') ont été remplacés dans leurs espace géométrique respectifs par deux charnières symétriques dont les deux parties fixes (Fix) (fig.24 / pl. 13) sont intégrées à la platine horizontale mobile (u), et dont les deux parties mobiles (Fm) (fig.24 / pl.13), opérant avec les précédentes, sont agencées aux deux bases circulaires de l'étrier (d).

Les verrouillages et déverrouillages de ces deux charnières s'obtiennent simultanément par l'action de deux doigts à billes identiques dont la fonction a déjà été détaillée dans son application au pliage de la colonne de direction. La figure 25 / pl.13 montre en outre que les deux pistons (Pex) des deux doigt à billes sont automatiquement enfoncés simultanément pendant le pliage du plateau avant (b) contre le plateau central (a) de là trottinette, ce qui a pour effet le déverrouillage automatique des deux charnières, et en suivi le pliage de l'étrier.

Le principe du doigt à billes peut conduire à l'idée de remplacer les billes par des éléments préférentiellement cylindriques permettant un beaucoup plus long dépassement à l'extérieur du cylindre que les billes pour une accroche plus profonde et une résistance mécanique décuplée du verrouillage.

On peut prévoir, agencé concentriquement au doigt à billes un système de serrage par molette permettant d'éliminer tout jeu dans les charnières après verrouillage.

La charnière de la colonne de direction ainsi que les deux charnières de l'étrier doivent par sécurité présenter leurs axes respectifs vers l'usager de la trottinette, de telle façon à offrir la meilleure résistance possible de la colonne de direction en cas de choc de la roue avant. La configuration globale de la direction permet cette sécurité.

Un perfectionnement peut aussi être apporté pour la solidarisation coplanaire du plateau central (a) avec le plateau avant (b), avant l'utilisation de la trottinette.

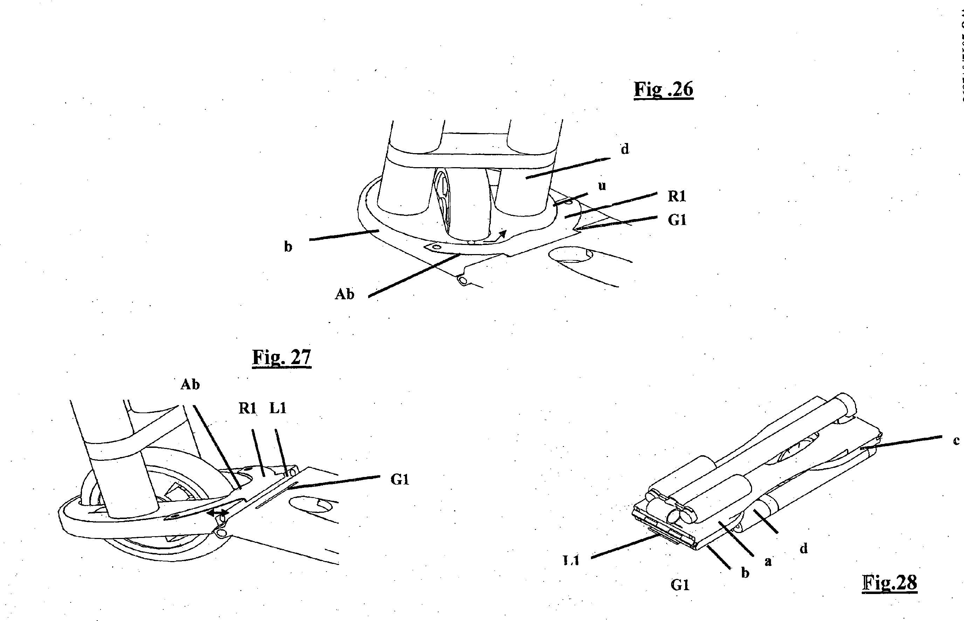

Il est représenté par les figures 26 et 27 / pl.14, et consiste en un ressort épais en lame (R1) (fig.26 / pl.14) fixé de préférence concentriquement à la platine horizontale mobile (u) et sur le plateau (b), ou intégré dans l'épaisseur du plateau (b) en symétrie sur l'arc de cercle du socle fixe de la platine jouxtant la charnière entre (a) et (b).

Ce ressort à lame (R1) est aménagé d'un retour longitudinal en forme de languette (L1) (fig.26/pl.14), laquelle se caractérise par une angulation fixe, pseudo-perpendiculaire (par défaut) au plan de (R1); la languette (L1) dépasse légèrement du plan du plateau (b) pour permettre son verrouillage dans une gorge longitudinale (G1) (fig.26 pl.14), du plateau (a) parallèlement à l'axe de liaison entre (a) et (b).

Une bille préférentiellement tournante (Ab) (fig.26/pl.14), de type bille de roulement à bille, fixement intégrée dans le volume de la platine horizontale mobile (u), centralement positionnée devant l'arc externe du passage de roue (lorsque la trottinette roule), et dépassant du plan supérieur de la platine d'une hauteur appropriée, permet par rotation de la colonne de direction entrainant la platine, de soulever le ressort (R1) en passant d'une position « bille extérieure au ressort » à une position « bille sous le ressort » (fig.26 et 27/pl.14), et vice versa.

Le soulèvement du ressort (R1) par la bille (Ab), libère la languette (L1) de sa position verrouillée le long et à l'intérieur de la gorge (G1) (fig.26 / pl.14), aménagée sur le plateau (a) parallèlement à la ligne de charnière entre les plateaux (a) et (b).

(L1) et (G1) opèrent ainsi entre eux par verrouillage/déverrouillage, pour solidariser, coplanaires, ou désolidariser les plateaux (a) et (b).

Il est important de noter que c'est seulement au moment du pliage de la trottinette, après une rotation du guidon à 180° à droite ou à gauche, que la bille se positionne sous le ressort (R1) pour déverrouiller la languette (L1) (fig.26 et 27 / pl.14) donc désolidariser les plateaux (a) et (b).

Donc pendant l'utilisation de la trottinette, la position de la bille, devant la roue avant, avec pour cette roue une limite extrême de virage à 90° à droite ou à gauche, rend le déverrouillage, de la languette (L1) impossible. La figure 28 / pl.14 montre comment la languette (L1) du ressort (R1) se positionne longitudinalement en bout du plateau (b) sur le plateau (a) de la trottinette.

La languette (L1) peut-être prévue beaucoup plus longue et plus haute que celle que montre la planche 14 pour une meilleure accroche, ce qui suppose que la gorge (G1) soit respectivement de mêmes longueur et profondeur.

Idéalement, après pliage, la languette (L1) doit ne pas déborder de la structure de la trottinette au-delà de l'axe de liaison entre les plateaux (a) et (b) qui lui est parallèle ; la pseudo angulation inférieure à 90° de la languette (L1) avec le plan du ressort (R1) permet D'éviter toute éventualité d'accrochage, tout en renforçant le verrouillage coplanaire de (a) et (b). Enfin, la languette (L1) doit former avec le plan de (R1) une angulation inférieure à 90° pour éviter tout problème d'accrochage.

## Revendications

1. Trottinette triptyque pliante, à roue avant (r) et à roue arrière (r') escamotables, comportant un plateau en trois parties, à savoir une partie centrale (a), aménagée longitudinalement de deux ouvertures oblongues médianes consécutives (m) et (n),
- reliée en charnière basse (h) à une partie latérale avant (b), dite également plateau latéral avant (b) ;
- reliée en charnière basse (h') à une partie latérale arrière (c), dite également plateau latéral arrière (c), intégrant verticalement avec son axe la roue arrière (r') aménagée d'un frein (s),
- les deux ouvertures oblongues (m) et (n) étant destinées à escamoter partiellement les roues (r) et (r') lors du rabattage à plat des faces inférieures de la partie latérale avant (b) et de la partie latérale arrière (c) en charnières sur la face intérieure de la partie centrale (a),
**caractérisée en ce que** la partie latérale avant (b) est aménagée d'une ouverture circulaire faisant office de cage de roulement, intégrant horizontalement, périmétriquement et à mi-épaisseur de la partie latérale avant (b), une collerette dont les couronnes opposées (E) et (F) portent en symétrie, prisonniers rotatifs, deux ensembles circulaires identiques et en contact plan, tournant chacun sur roulement à fonction horizontale sur les couronnes opposées (E) et (F), ces deux ensembles intégrant verticalement entre eux la roue avant (r) avec son axe (G), et portant fixés de part et d'autre de la roue avant (r), les deux bras d'un étrier (d), partie inférieure de la colonne de direction de la trottinette, centralement et verticalement surmonté d'un tube constitué d'une partie fixe (e) et d'une partie télescopique (f) coulissante dans la partie fixe (e), partie centrale de la colonne de direction dont la partie supérieure est le guidon (g) solidarisé à la partie télescopique (f) en son milieu,
- la partie centrale (a) et la partie latérale avant (b), d'une part, et la partie centrale (a) et la partie latérale arrière (c), d'autre part, étant maintenues en liaison coplanaire fixe par un ensemble de deux couples de grenouillères (z1, z2 ; z3, z4) d'autre part, chaque couple de grenouillères (z1, z2 ; z3, z4) étant apte à être relié par un levier actif commun (j) pour un couple de grenouillères (z1, z2) et (j') pour l'autre couple de grenouillères (z3, z4) ;
- les charnières basses (h) et (h') étant protégées du cisaillement par l'aménagement sur les deux chants charnières de la partie centrale (a) d'excroissances (L, L' ; R, R'), venant s'encastrer dans des ouvertures femelles correspondantes sur les chants de (b) et (c) ;
- les chants charnières entre la partie centrale (a) et la partie latérale avant (b), d'une part, et la partie centrale (a) et la partie latérale arrière (c), d'autre part, ainsi que, au niveau de ces chants charnières, les ouvertures femelles d'encastrement des excroissances (L, L'), sont aménagés de Silentblocs permettant à la fois de supprimer les bruits de frottement et d'assouplir les structures de liaisons entre les plateaux.

2. Trottinette triptyque pliante, à roues escamotables, selon la revendication 1, **caractérisée en ce que** :
- l'étrier (d) portion inférieure de la colonne de direction est verticalement fixée à sa base par ses deux bras sur une platine (u), prisonnière rotative de la partie latérale avant (b), constituée de deux ensembles circulaires tournants identiques, chacun comportant un plateau épaulé respectif (A, C), intégrant chacun périmétriquement un roulement respectif (B, D), ces deux ensembles respectifs (A ; B) et (C ; D) venant s'insérer symétriquement en sandwich sur les deux faces (E, F) d'une collerette circulaire agencée horizontalement en épaulement dans l'épaisseur de l'ouverture de la partie latérale avant (b), faisant office de cage de roulement, et parallèlement aux deux faces de la partie latérale avant (b), ledit sandwich intégrant verticalement la roue avant (r), à travers deux ouvertures en vis-à-vis de passages de roue, ouvertures identiques, oblongues, médianes, aménagées respectivement sur les plateaux épaulés respectifs (A, C), préférentiellement en contact par leurs faces internes après vissage bloqué de la platine rotative (u) verticalement à la base filetée de chacun des deux bras de l'étrier (d), soit à la base de chacune des deux articulations inférieures des joints de cardans cylindriques simples (k, k') en appui sur la face supérieure du plateau épaulé (C).

3. Trottinette triptyque pliante à roues escamotables, selon les deux premières revendications, **caractérisée en ce que** :
- l'étrier (d), partie verticale inférieure de la colonne de direction, aménagé d'un renfort horizontal (d'), est relié perpendiculairement à la platine rotative (u) par vissage vertical interne en bout de chacun de ses deux bras, symétriquement de part et d'autre de la roue avant (r), par deux vis (S1, S2) de haute résistance, filetées extérieurement, pénétrant par la face externe du plateau épaulé (A), maintenant prisonniers rotatifs le plateau épaulé (A), le roulement (B), le plateau épaulé (C) et le roulement (D) de part et d'autre de la collerette agencée horizontalement dans l'épaisseur de l'ouverture du plateau (b) et aboutissant respectivement aux bases des deux articulations inférieures des cardans cylindriques simples (k, k') filetées intérieurement pour les recevoir ; les cardans cylindriques simples (k, k') étant aptes à être maintenus verticalement par vissage de deux manchons respectifs (o, o') englobant leurs deux filetages externes ;
- la libération des articulations des cardans cylindriques simples (k, k') par le dévissage respectif des deux manchons (o, o') à la base de l'étrier (d) permet de faire basculer l'étrier surmonté des trois autres éléments verticaux (e, f, g) solidarisés à lui, et constituant avec lui la colonne de direction, vers l'extérieur du plateau (b), et de fait dans le prolongement d'une ligne médiane traversant longitudinalement la partie latérale arrière (c), la partie centrale (a) et la partie latérale avant (b).
- après rabattement à plat des plateaux (b) et la partie latérale arrière (c) sur le plateau (a), les roues (r, r') sont partiellement escamotées dans les deux ouvertures (m, n) de ce plateau ; consécutivement au basculement de la colonne de direction (d, e, f) longitudinalement vers la face supérieure du plateau (c), l'étrier (d) vient coiffer en lucarne la roue arrière (r') surmontée de son frein (s) ; les dévissages vers le guidon des manchons (q, q') de la colonne de direction, libèrent les articulations (p, p') qui permettent de rabattre, en deux angles droits consécutifs encadrant l'arrière du plateau (a), la portion (e) de la colonne de direction, incorporant la portion télescopique (f) centralement solidarisée au guidon (g) parallèlement à la face externe du plateau (a) au-dessus des dépassements des roues (r', r) de ce plateau, du coté opposé à l'étrier (d).

4. Trottinette triptyque pliante à roues escamotables, selon la revendication 1, **caractérisée en ce que** :
- les chants charnières entre la partie centrale (a) et la partie latérale avant (b) d'une part, et entre la partie centrale (a) et la partie arrière (c) d'autre part, sont soit tous les quatre perpendiculaires aux plans des plateaux central (a), avant (b) et arrière (c), soit tous les quatre chanfreinés deux à deux, selon une légère angulation planaire ouverte entre les faces externes des plateaux, et dont la ligne de sommet coïncide avec la ligne de charnière, l'angulation réalisée permettant d'abaisser le niveau du plateau (a) par rapport au sol.

5. Trottinette triptyque pliante à roues escamotables, selon les revendications 2 et 3, **caractérisée en ce que** :
- un trou cylindrique (t), ou préférentiellement oblong, médian et en symétrie entre le plateau central (a) et la partie latérale arrière (c), et dont le diamètre, ou la largeur médiatrice pour un trou oblong, coïncide avec la ligne de jonction de la partie centrale (a) et de la partie latérale arrière (c), permet après rabattement à plat de la partie latérale arrière (c) sur la partie centrale (a) de matérialiser une échancrure semi-cylindrique (t') destinée à recevoir, perpendiculairement aux plans de la partie centrale (a) et de la partie latérale arrière (c), le manchon (q) après libération des joints de cardans (p), et ce en débordement de l'échancrure (t') si (t) est cylindrique, et sans débordement si (q) est ajusté dans un trou (t) oblong.

6. Trottinette triptyque pliante à roues escamotables, selon la revendication 1, **caractérisée en ce que** :
- le chant vertical (i') du plateau avant (b) est muni en presque totalité d'une bande épaisse (P) collée ou clipée, faisant usage de pare-chocs et réalisée en caoutchouc, Néoprène ou autres matériaux adéquats.

7. Trottinette triptyque pliante à roues escamotables, selon la revendication 1, **caractérisée en ce que** :
les pliages et dépliages rapides des deux parties de la colonne de direction sont automatiquement obtenus en remplaçant les deux cardans simples (q, q') par une unique charnière dont les deux parties (Cb1) fixe et (Cb2) mobile sont verrouillables ou déverrouillables par l'action d'un doigt à billes cylindrique (Dab), fixé verticalement en position centrale dans le corps de l'une ou l'autre partie de la charnière, doigt à billes activable par un piston/ressort (Pex) situé à une extrémité, qui permet, en position bloquée partiellement externe de ses billes diamétrales (Bex) de verrouiller la charnière,
et en position affleurantes des mêmes billes (Bin) de la déverrouiller.

8. Trottinette triptyque pliante à roues escamotables, selon les revendications 1 et 7, **caractérisées en ce que** :
les pliages et dépliages rapides de l'étrier (d), constitué de deux bras cylindriques verticaux aboutissant verticalement et symétriquement sur la platine mobile (u), sont automatiquement obtenus en remplaçant les deux cardans simples symétriques (k, k') par deux charnières symétriques dont les deux parties fixes (Fix) sont intégrées à la platine mobile (u), dont les deux parties mobiles (Fm) sont respectivement fixées à chaque base de l'étrier (d), et dont les verrouillages et déverrouillages sont automatiquement obtenus en même temps, par l'action simultanée de deux doigts à billes identiques (Dab2) respectivement fixés verticalement en position centrale soit dans les deux parties fixes (Fix), soit dans les deux parties mobiles (Fim) des deux charnières, les deux pistons/ressorts respectifs (Pex) des deux doigts à billes permettant de les activer en position bloquée partiellement externe des billes (Bex) pour verrouiller les deux charnières, et en position affleurantes des billes (Bin) pour les déverrouiller.

9. Trottinette triptyque pliante à roues escamotables, selon la revendication 1, **caractérisée en ce que** :
la solidarisation coplanaire des plateaux central (a) et avant (b) et leur désolidarisation peuvent être automatiquement obtenues en remplaçant l'action des grenouillères (z1, z2) par l'action d'un ressort épais en lame (R1) fixé au plateau (b) et aménagé d'une languette longitudinale intégrée (L1), pseudo-perpendiculaire au plan de (R1), laquelle opère en verrouillage coplanaire fixe du plateau central (a) et du plateau avant (b) par son introduction dans une gorge longitudinale (G1) aménagée dans l'épaisseur du plateau avant (a) parallèlement à l'axe de liaison (h) du plateau central (a) et du plateau avant (b), leur déverrouillage nécessaire au pliage de la trottinette s'opérant par le moyen d'une bille (Ab) fixée sur le plateau mobile (u), centralement devant le passage de la roue avant (r), en situation de roulage, et positionnée pour passer sous le ressort (R1) et le soulever, ce qui provoque le retrait de la languette (L1) de la gorge (G1), et ce par rotation du guidon entraînant la platine mobile (u).

## Patentansprüche

1. Dreiteiliger zusammenklappbarer Tretroller mit einziehbarem Vorderrad (r) und mit einziehbarem Hinterrad (r'), aufweisend ein Trittbrett aus drei Teilen, nämlich einem zentralen Teil (a), längs ausgestattet mit zwei aufeinanderfolgenden mittigen länglichen Öffnungen (m) und (n),
- verbunden mittels eines unteren Scharniers (h) mit einem vorderen seitlichen Teil (b), auch als vorderes seitliches Brett (b) bezeichnet,
- verbunden mittels eines unteren Scharniers (h') mit einem hinteren seitlichen Teil (c), auch als hinteres seitliches Brett (c) bezeichnet, das vertikal mit seiner Achse das mit einer Bremse (s) ausgestattete Hinterrad (r') integriert,
- wobei die zwei länglichen Öffnungen (m) und (n) bestimmt sind, die Räder (r) und (r') beim flachen Umschlagen der Unterseiten des vorderen seitlichen Teils (b) und des hinteren seitlichen Teils (c) mit Scharnieren auf der Unterseite des zentralen Teils (a) einzuziehen,
**dadurch gekennzeichnet, dass** der vordere seitliche Teil (b) mit einer kreisförmigen Öffnung ausgestattet ist, die als Lagerkäfig dient, der horizontal, umfänglich und in halber Dicke des vorderen seitlichen Teils (b) einen Ring integriert, dessen gegenüberliegende Einfassungen (E) und (F) symmetrisch rotierend eingeschlossen zwei identische kreisrunde Einheiten flachkontaktierend tragen, die jeweils auf einem Lager mit horizontaler Funktion auf den gegenüberliegenden Einfassungen (E) und (F) drehen, wobei diese beiden Einheiten vertikal zwischen sich das Vorderrad (r) mit seiner Achse (G) integrieren und, befestigt auf der einen und der anderen Seite des Vorderrads (r), die zwei Schenkel eines Bügels (d) tragen, an der Unterseite der Lenkstange des Tretrollers, zentral und vertikal überragt von einem Rohr, das von einem starren Teil (e) und einem Teleskopteil (f) gebildet ist, das in dem starren Teil (e) gleitet, wobei der zentrale Teil der Lenkstange, deren oberer Teil der Lenker (g) ist, der in seiner Mitte mit dem Teleskopteil (f) fest verbunden ist,
- wobei der zentrale Teil (a) und der vordere seitliche Teil (b) zum einem und der zentrale Teil (a) und der hintere seitliche Teil (c) zum anderen in fester koplanarer Verbindung von einer Einheit aus zwei Paaren von Verschlussschnallen (z1, z2; z3, z4) gehalten werden, wobei andererseits jedes Paar von Verschlussschallen (z1, z2; z3, z4) imstande ist, mittels eines gemeinsamen aktiven Hebels (j) für ein Paar von Verschlussschnallen (z1, z2) und (j') für das andere Paar von Verschlussschnallen (z3, z4) verbunden zu sein,
- wobei die unteren Scharniere (h) und (h') gegen Scheren mittels Ausbildung auf den beiden Scharnierkanten des zentralen Teils (a) von Vorsprüngen (L, L'; R, R') geschützt sind, die in entsprechende weibliche Öffnungen auf den Kanten von (b) und (c) rasten,
- wobei die Scharnierkanten zwischen dem zentralen Teil (a) und dem vorderen seitlichen Teil (b) zum einen und dem zentralen Teil (a) und dem hinteren seitlichen Teil (c) zum anderen sowie im Bereich dieser Scharnierkanten die weiblichen Rastöffnungen der Vorsprünge (L, L') mit Silentblöcken ausgestattet sind, die erlauben, sowohl die Reibungsgeräusche zu beseitigen als auch die Verbindungsstrukturen zwischen den Brettern zu flexibilisieren.

2. Dreiteiliger zusammenklappbarer Tretroller mit einziehbaren Rädern nach Anspruch 1, **dadurch gekennzeichnet, dass**:
- der Bügel (d) im unteren Abschnitt der Lenkstange an seiner Basis mittels seiner beiden Schenkel auf einer Scheibe (u) vertikal befestigt ist, die vom vorderen seitlichen Teil (b) rotierend eingeschlossen ist, gebildet von zwei identischen drehenden kreisrunden Einheiten, wobei jede eine jeweilige anliegende Scheibe (A, C) aufweist, die jeweils umfänglich ein jeweiliges Lager (B, D) integrieren, wobei diese jeweiligen Einheiten (A; B) und (C; D) symmetrisch sandwichförmig auf den zwei Seiten (E, F) eines kreisrunden Rings eingepasst sind, der horizontal anliegend in der Dicke der Öffnung des vorderen seitlichen Teils (b), die als Lagerkäfig dient, und parallel zu den zwei Seiten des vorderen seitlichen Teils (b) ausgebildet ist, wobei das Sandwich das Vorderrad (r) durch zwei gegenüberliegende Raddurchgangsöffnungen vertikal integriert, wobei diese Öffnungen identisch, länglich, mittig jeweils auf den jeweiligen anliegenden Scheiben (A, C) ausgebildet sind, die vorzugsweise mittels ihrer Innenseiten nach blockierter Verschraubung der rotierenden Scheibe (u) vertikal zur gewindeten Basis jeder der zwei Schenkel des Bügels (d) im Kontakt sind, das heißt, an der Basis jedes der zwei unteren Gelenke der einfachen zylindrischen Kardanverbindungen (k, k') in Abstützung auf der Oberseite der anliegenden Scheibe (C).

3. Dreiteiliger zusammenklappbarer Tretroller mit einziehbaren Rädern nach den zwei ersten Ansprüchen, **dadurch gekennzeichnet, dass**:
- der Bügel (d) als unterer vertikaler Teil der Lenkstange, ausgestattet mit einer horizontalen Verstärkung (d'), senkrecht mit der rotierenden Scheibe (u) mittels interner vertikaler Verschraubung am Ende jedes seiner beiden Schenkel verbunden ist, symmetrisch beiderseits des Vorderrads (r), mittels zweier hochfester Schrauben (S1, S2) mit Außengewinde, die von der Außenseite der anliegenden Scheibe (A) eindringen, die anliegende Scheibe (A), das Lager (B), die anliegende Scheibe (C) und das Lager (D) beiderseits des horizontal in der Dicke der Öffnung des Trittbretts (b) ausgebildeten Rings rotierend einschließen und jeweils an den Basen der zwei unteren Gelenke der zwecks ihrer Aufnahme innengewindeten einfachen zylindrischen Kardanverbindungen (k, k') enden, wobei die einfachen zylindrischen Kardanverbindungen (k, k') imstande sind, mittels Verschrauben von zwei jeweiligen Muffen (o, o'), die ihren beiden Außengewinde umschließen, vertikal gehalten zu werden,
- die Freigabe der Gelenke der einfachen zylindrischen Kardanverbindungen (k, k') mittels eines jeweiligen Abschraubens der zwei Muffen (o, o') an der Basis des Bügels (d) erlaubt, den Bügel mit den anderen drei vertikalen Elementen darüber (e, f, g), die mit ihm fest verbunden sind und mit ihm die Lenkstange bilden, nach außerhalb des Bretts (b) und faktisch in der Verlängerung einer mittigen Linie, die den hinteren seitlichen Teil (c), den zentralen Teil (a) und den vorderen seitlichen Teil (b) längs durchquert, zu kippen,
- die Räder (r, r') nach dem flachen Umschlagen der Bretter (b) und des hinteren seitlichen Teils (c) auf das Brett (a) teilweise in den zwei Öffnungen (m, n) dieses Bretts eingezogen sind, wobei der Bügel (d) nach dem Kippen der Lenkstange (d, e, f) längs in Richtung der Oberseite des Bretts (c) das Hinterrad (r') mit seiner Bremse (s) darüber wie ein Oberlicht bedeckt, wobei durch das Lösen der Muffen (q, q') von der Lenkstange in Richtung des Lenkers die Gelenke (p, p') freigegeben werden, die erlauben, den Abschnitt (e) der Lenkstange, der den zentral mit dem Lenker (g) verbundenen Teleskopabschnitt (f) integriert, in zwei aufeinanderfolgenden rechten Winkeln parallel zur Außenseite des Bretts (a), wobei der hintere Teil des Bretts (a) umrahmt wird, über Überstände der Räder (r', r) dieses Bretts auf der dem Bügel (d) gegenüberliegenden Seite herunterzuklappen.

4. Dreiteiliger zusammenklappbarer Tretroller mit einziehbaren Rädern nach Anspruch 1, **dadurch gekennzeichnet, dass**:
- die Scharnierkanten zwischen dem zentralen Teil (a) und dem vorderen seitlichen Teil (b) zum einen und zwischen dem zentralen Teil (a) und dem hinteren Teil (c) zum anderen entweder alle vier rechtwinklig zu den Ebenen des zentralen (a), vorderen (b) und hinteren (c) Bretts oder alle vier gemäß einer leichten, zwischen den Außenseiten der Bretter offenen planaren Winkligkeit paarig abgeschrägt sind, wobei die Kammlinie mit der Scharnierlinie zusammenfällt, wobei die durchgeführte Winkligkeit erlaubt, die Ebene des Bretts (a) in Bezug zum Boden abzusenken.

5. Dreiteiliger zusammenklappbarer Tretroller mit einziehbaren Rädern nach den Ansprüchen 2 und 3, **dadurch gekennzeichnet, dass**:
- ein zylindrisches oder vorzugsweise längliches mittiges und symmetrisches Loch (t) zwischen dem zentralen Brett (a) und dem hinteren seitlichen Teil (c), dessen Durchmesser oder, für ein längliches Loch, mittelsenkrechte Breite mit der Verbindungslinie des zentralen Teils (a) und dem hinteren seitlichen Teil (d) zusammenfällt, nach dem flachen Umschlagen des hinteren seitlichen Teils (c) auf den zentralen Teil (a) erlaubt, einen halbzylindrigen Ausschnitt (t') zu materialisieren, der bestimmt ist, senkrecht zu den Ebenen des zentralen Teils (a) und des hinteren seitlichen Teils (c) die Muffe (q) nach Freigabe der Kardanverbindungen (p) aufzunehmen, und zwar überstehend über dem Ausschnitt (t'), wenn (t) zylindrisch ist, und ohne Überstand, wenn (q) in ein längliches Loch (t) eingepasst ist.

6. Dreiteiliger zusammenklappbarer Tretroller mit einziehbaren Rädern nach Anspruch 1, **dadurch gekennzeichnet, dass**:
- die vertikale Kante (i') des vorderen Bretts (b) fast vollständig mit einem geklebten oder geklipsten dicken Band (P) ausgestattet ist, das als Stoßfänger dient und aus Gummi, Neopren oder anderen adäquaten Materialien hergestellt ist.

7. Dreiteiliger zusammenklappbarer Tretroller mit einziehbaren Rädern nach Anspruch 1, **dadurch gekennzeichnet, dass**:
das schnelle Zusammenklappen und Auseinanderklappen der zwei Teile der Lenkstange automatisch erfolgen durch Ersetzen der zwei einfachen Kardanverbindungen (q, q') durch ein einziges Scharnier, dessen beide Teile, fest (Cb1) und bewegbar (Cb2), durch Betätigen eines zylindrischen Kugelfingers (Dab) verriegelbar oder entriegelbar sind, der vertikal in zentraler Position in dem Körper des einen oder anderen Teils des Scharniers befestigt ist, wobei der Kugelfinger mittels eines Kolbens/Feder (Pex) aktivierbar ist, der sich an einem Ende befindet, der erlaubt, in teilweise externer blockierter Position seiner diametralen Kugeln (Bex) das Scharnier zu verrriegeln und es in anliegender Position derselben Kugeln (Bin) zu entriegeln.

8. Dreiteiliger zusammenklappbarer Tretroller mit einziehbaren Rädern nach den Ansprüchen 1 und 7, **dadurch gekennzeichnet, dass**:
das schnelle Zusammenklappen und Auseinanderklappen des Bügels (d), der von zwei vertikalen zylindrischen Schenkeln gebildet ist, die vertikal und symmetrisch auf der beweglichen Scheibe (u) enden, automatisch erfolgen durch Ersetzen der zwei einfachen symmetrischen Kardanverbindungen (k, k') durch zwei symmetrische Scharniere, deren beide festen Teile (Fix) in der bewegbaren Scheibe (u) integriert sind, deren beide beweglichen Teile (Fm) jeweils an jeder Basis des Bügels (d) befestigt sind und deren Verriegelungen und Entriegelungen automatisch gleichzeitig erfolgen durch gleichzeitiges Betätigen von zwei identischen Kugelfingern (Dab2), die jeweils vertikal in zentraler Position befestigt sind, entweder in den zwei festen Teilen (Fix) oder in den zwei bewegbaren Teilen (Fim) der zwei Scharniere, wobei die zwei jeweiligen Kolben/Federn (Pex) der zwei Kugelfinger erlauben, sie in teilweise externer blockierter Position der Kugeln (Bex) zu aktivieren, um die zwei Scharniere zu verriegeln, und in anliegender Position der Kugeln (Bin), um sie zu entriegeln.

9. Dreiteiliger zusammenklappbarer Tretroller mit einziehbaren Rädern nach Anspruch 1, **dadurch gekennzeichnet, dass**:
die koplanare Verbindung des zentralen Bretts (a) und des vorderen Bretts (b) und ihre Trennung automatisch erfolgen können durch Ersetzen der Aktion der Verschlussschnallen (z1, z2) durch die Aktion einer dicken Blattfeder (R1), die am Brett (b) befestigt ist und mit einer integrierten länglichen Zunge (L1) ausgestattet ist, die zur Ebene (R1) pseudo-senkrecht ist, welche in fester koplanarer Verriegelung des zentralen Bretts (a) und des vorderen Bretts (b) mittels ihrer Einführung in eine längliche Nut (G1) funktioniert, die in der Dicke des vorderen Bretts (a) parallel zur Verbindungsachse (h) des zentralen Bretts (a) und des vorderen Bretts (b) ausgebildet ist, wobei ihre für das Klappen des Tretrollers notwendige Entriegelung anhand einer Kugel (Ab) erfolgt, die auf der bewegbaren Scheiben (u) befestigt ist, zentral vor dem Durchgang des Vorderrads (r), in Fahrsituation, und positioniert ist, um unter die Feder (R1) zu gelangen und sie anzuheben, was den Rückzug der Zunge (L1) aus der Nut (G1) bewirkt, und zwar durch Drehen des Lenkers, wodurch die bewegbare Scheibe (u) mitgenommen wird.

## Claims

1. Folding three-piece scooter, with front (r) and rear (r') retractable wheels, comprising a three-piece base, namely a central portion (a), in which are longitudinally formed two consecutive median oblong openings (m, n),
- connected by a bottom hinge (h) to a front lateral portion (b), also called front lateral plate (b);
- connected by a bottom hinge (h') to a rear lateral portion (c), also called rear lateral plate (c), vertically incorporating the rear wheel (r') with its axle formed with a brake (s),
- connected by a bottom hinge (h') to a rear side part (c)
- the two oblong openings (m, n) being intended to allow partial retraction of the wheels (r, r') therein when the lower faces of the front lateral portion (b) and of the rear lateral portion (c) are folded down flat in hinges on the inner face of the central portion (a), **characterized in that** the front lateral portion (b) is formed with a circular opening serving as bearing cage, horizontally and perimetrically integrating, midway through the thickness of the front lateral portion (b), a skirt whereof the opposite crowns (E, F) symmetrically support, rotatably captive, two identical circular assemblies in flat contact, each rotating on a bearing with a horizontal function on the opposite crowns (E, F), these two assemblies vertically incorporating between them the front wheel (r) with its axle (G), and supporting fixed on either side of the front wheel (r), the arms of a saddle (d), lower portion of the steering column of the scooter, centrally and vertically topped by a tube made up of a fixed portion (e) and a telescoping portion (f) sliding in the fixed portion (e), central portion of the steering column whereof the upper portion is the handlebars (g) secured to the telescoping portion (f) in the middle thereof,
- the central portion (a) and the front lateral portion (b), on the one hand, and the central portion (a) and the rear lateral portion (c), on the other hand being maintained in a fixed coplanar connection by a set of two pairs of toggles (z1, z2; z3, z4) on the one hand, each pair or toggles (z1, z2; z3, z4) being able to be connected by a shared active lever (j) for one pair or toggles (z1, z2) and (j') for the other pair or toggles (z3, z4);
- the bottom hinges (h, h') being protected from shearing by the provision on the two hinge edges of the central portion (a) of protuberances (L, L'; R, R'), which fit into the corresponding female openings on the edges of the front lateral portion (b) and the rear lateral portion (c);
- the hinge edges between the central portion (a) and the front lateral portion (b), on the one hand, and between the central portion (a) and the rear lateral portion (c), on the other hand, as well as, at these hinge edges, the female openings for fitting the protuberances (L, L'), are formed with Silentblocs making it possible both to eliminate friction noises and make the connecting structures between the bases more flexible.

2. Folding three-piece scooter, with retractable wheels, according to the claim 1, **characterized in that**:
- the saddle (d), lower portion of the steering column, is vertically fixed at its base by both of its arms on a plate (u), held rotatably captive by the front lateral portion (b), made up of two identical rotary circular assemblies, each including a shouldered base (A, C) respectively, each perimetrically incorporating a respective bearing (B, D), these two respective assemblies (A; B) and (C; D) being symmetrically inserted sandwiched on the two faces (E, F) of a circular skirt arranged horizontally in a shoulder in the thickness of the opening of the front lateral portion (b), serving as bearing cage, and parallel to the two faces of the front lateral portion (b), said sandwich vertically integrating the front wheel (r), through two opposite openings of the wheel passages, which are identical, oblong, median openings respectively formed on the respective shouldered plates (A, C), preferably in contact by their inner faces after screwing locked in the rotary plate (u) vertically at the threaded base of each of the two arms of the saddle (d), or at the base of each of the two lower articulations of the single cylindrical Cardan joints (k, k') bearing on the upper face of the shouldered plate (C).

3. Folding three-piece scooter, with retractable wheels, according to the first two claims, **characterized in that**:
- the saddle (d), lower vertical part of the steering column, formed with a horizontal reinforcement (d'), is perpendicularly connected to the rotary plate (u) by internal vertical screwing at the end of each of its two arms, symmetrically on either side of the front wheel (r), by two high-strength screws (S1, S2), outwardly threaded, penetrating through the outer face of the shouldered plate (A), keeping the shouldered plate (A), the bearing (B), the shouldered plate (C) and the bearing (D) rotatably captive on either side of the flange arranged horizontally in the thickness of the opening of the base (b) and respectively ending at the bases of the two lower articulations of the single cylindrical Cardan joints (k, k') inwardly threaded to receive them; the single cylindrical Cardan joints (k, k') being able to be vertically maintained by screwing two respective sleeves (o, o') encompassing their two outer threads;
- releasing the articulations of the single cylindrical Cardan joints (k, k') by respectively unscrewing the two sleeves (o, o') at the base of the saddle (d) makes it possible to tilt the saddle topped by the other three vertical elements (e, f, g) secured thereto, and forming the steering column with it, toward the outside of the plate (b), and thereby in the extension of a median line passing longitudinally through the rear lateral portion (c), the central portion (a) and the front lateral portion (b);
- after folding the plates (b) and the rear lateral portion (c) down flat on the plate (a), the wheels (r, r') are partially retracted into the two openings (m, n) of that plate; following the tilting of the steering column (d, e, f) longitudinally toward the upper face of the plate (c), the saddle (d) fits the corner of the rear wheel (r') topped by its brake (s); the unscrewing toward the handlebars of the sleeves (q, q') of the steering column, releases the articulations (p, p'), which make it possible fold down, in two consecutive right angles framing the back of the plate (a), the portion (e) of the steering column, incorporating the telescoping portion (f) centrally secured to the handlebars (g) parallel to the outer face of the plate (a) above the protrusions of the wheels (r', r) of that plate, on the side opposite the saddle (d).

4. Folding three-piece scooter with retractable wheels, according to claim 1, **characterized in that**:
- the hinge edges between the central portion (a) and the front lateral portion (b), on the one hand, and between the central portion (a) and the rear lateral portion (c), on the other hand, are either all four perpendicular to the planes of the central (a), front (b) and rear (c) plates, or all four chamfered two by two, according to a slight planar angulation open between the outer faces of the plates, and the apex line of which coincides with the hinge line, the angulation produced making it possible to lower the level of the plate (a) relative to the ground.

5. Folding three-piece scooter with retractable wheels according to claims 2 and 3, **characterized in that**:
- a cylindrical, or preferably oblong, wheel (t), median and symmetrical between the central plate (a) and the rear lateral portion (c), and which diameter, or median width for an oblong hole, coincides with the junction line of the central portion (a) and of the rear lateral portion (c), makes it possible, after folding the rear lateral portion (c) down flat on the central portion (a), to embody a semi-cylindrical indentation (t') intended to receive, perpendicular to the planes of the central portion (a) and the rear lateral portion (c), the sleeve (q) after releasing the Cardan joints (p), overhanging the indentation (t') if (t) is cylindrical, and without overhang if (q) is adjusted in an oblong hole (t).

6. Folding three-piece scooter with retractable wheels according to claim 1, **characterized in that**:
- the vertical edge (i') of the front plate (b) is provided almost entirely with a thick strip (P) adhered or clipped, forming bumpers and made from rubber, Neoprene or other suitable materials.

7. Folding three-piece scooter with retractable wheels according to claim 1, **characterized in that**:
the rapid folding and unfolding of the two parts of the steering column is obtained automatically by replacing the two single Cardans (q, q') with a single hinge whereof the two portions, (Cb1) fixed and (Cb2) mobile, can be locked or unlocked through the action of a cylindrical ball finger (Dab), fixed vertically in a central portion in the body of either part of the hinge, this ball finger being able to be activated by a piston/spring (Pex) situated at one end, which makes it possible, in the partially outer locked position of its diametric balls (Bex) to lock the hinge, and, in the flush position of the same balls (Bin), to unlock it.

8. Folding three-piece scooter, with retractable wheels according to claims 1 and 7, **characterized in that**:
the rapid folding and unfolding of the saddle (d), made up of two vertical cylindrical arms vertically and symmetrically ending on the mobile plate (u), are automatically obtained by replacing the two symmetrical single Cardans (k, k') with two symmetrical hinges whereof the two fixed parts (Fix) are integrated into the mobile plate (u), whereof the two mobile portions (Fm) are respectively fixed to each plate of the saddle (d), and the locking and unlocking of which is automatically obtained at the same time, through simultaneous action of two identical ball fingers (Dab2) respectively vertically fixed in a central position either in the two fixed portions (Fix) or in the two mobile portions (Fim) of the two hinges, the two respective pistons/springs (Pex) of the two ball fingers making it possible to activate them in the partially outer locked position of the balls (Bex) to lock the two hinges, and, in the flush position of the balls (Bin), to unlock them.

9. Folding three-piece scooter with retractable wheels according to claim 1, **characterized in that**:
the coplanar securing of the central plate (a) and of the front lateral portion (b) and their separation be obtained automatically by replacing the action of the toggles (z1, z2) with the action of a thick plate spring (R1) fixed to the plate (b) and formed with an integrated longitudinal tab (L1), pseudo-perpendicular to the plane of (R1), which works in fixed coplanar locking of the central plate (a) and of the front plate (b) through its insertion into a longitudinal groove (G1) formed in the thickness of the front plate (a) parallel to the hinge pin (h) of the central plate (a) and of the front plate (b), their unlocking necessary to fold the scooter being done through a ball (Ab) fixed on the mobile plate (u), centrally in front of the passage of the front wheel (r), in a rolling situation, and positioned to pass under the spring (R1) and raise it, which causes the tab (L1) to be removed from the groove (G1), by this, by rotating the handlebars driving the mobile plate (u).
